# EUROPÄISCHE PATENTSCHRIFT

(11) **EP 3 819 422 B1**
(45) Veröffentlichungstag und Bekanntmachung des Hinweises auf die Patenterteilung: **13.03.2024**
(21) Anmeldenummer: 19207469.8
(22) Anmeldetag: 06.11.2019
(51) Int. Cl.: D06F 57/08, F16C 11/10

(54) **GELENK UND WÄSCHESTÄNDER MIT EINEM SOLCHEN GELENK**
JOINT AND LAUNDRY STAND WITH SUCH A JOINT
ARTICULATION ET SÉCHOIR À LINGE DOTÉ D'UNE TELLE ARTICULATION

(43) Veröffentlichungstag der Anmeldung: 12.05.2021
(73) Patentinhaber: Stewi AG, 8404 Winterthur (CH)
(72) Erfinder: SCHERER, Benjamin, 8610 Uster (CH); EBNÖTHER, Stephan, 8400 Winterthur (CH); FÄH, Lorenz, 8702 Zollikon (CH)
(74) Vertreter: EGLI-EUROPEAN PATENT ATTORNEYS

(56) Entgegenhaltungen:
- DE-A1- 2 144 454
- GB-A- 2 446 806
- US-A- 6 086 284
- US-A1- 2003 077 111

## Beschreibung

Die vorliegende Erfindung betrifft ein Gelenk mit zumindest einem ersten Gelenkabschnitt und einem zweiten Gelenkabschnitt sowie einen Wäscheständer mit einem solchen Gelenk.

Gängige Wäscheständer weisen eine Aufhängevorrichtung bzw. Aufhängefläche sowie zwei Standbeine, die üblicherweise U-förmig ausgebildet und jeweils an zwei Seiten der Aufhängevorrichtung fixiert sind, auf. Die Standbeine sind dabei gegenüber der Aufhängevorrichtung über ein Gelenk verschwenkbar, so dass diese in einer Gebrauchsposition ausgeklappt sind, um einen sicheren Stand des Wäscheständers zu gewährleisten. Nach Gebrauch des Wäscheständers können die Standbeine wieder eingeklappt werden, so dass der Wäscheständer platzsparend aufbewahrt werden kann.

Die vorstehend beschriebenen Wäscheständer weisen dabei zumeist einfache Drehgelenke auf, bei denen das Verschwenken der Standbeine durch einen Anschlag begrenzt ist. Weitere Arretierungsoptionen sind nicht vorgesehen. Dadurch kann sich der Verschwenkwinkel aus einer Position, in der die Standbeine ausgeklappt sind, ungehindert verkleinern, da, wie bereits angesprochen, nur in Vergrösserungsrichtung des Schwenkwinkels eine Bewegungsbegrenzung vorgesehen ist. Infolgedessen besteht das Risiko, dass die Standbeine in Verkleinerungsrichtung des Schwenkwinkels unbeabsichtigt ihre Position verändern können, insbesondere, wenn die Standbeine nicht bis zum Anschlag ausgeklappt wurden und/oder das Gelenk die Standbeine nur vergleichsweise lose hält. Wird der Wäscheständer beispielsweise umgesetzt, können sich die Standbeine in einem solchen Fall beim Wiederaufsetzen in einer instabilen Aufstellposition befinden, so dass der Wäscheständer umkippen kann. Gleichermassen besteht das Risiko für den Benutzer, sich die Finger zwischen der Aufhängevorrichtung und dem zusammenklappenden Standbein oder den zusammenklappenden Standbeinen einzuklemmen. In ähnlicher Weise ergeben sich aber auch Nachteile, wenn sich die Standbeine des Wäscheständers aus dem eingeklappten Zustand unbeabsichtigt in eine Verschwenkposition bewegen, die lediglich durch den vorgenannten Anschlag beschränkt ist.
GB 2 446 806 A beschreibt ein Gelenk mit einer ersten Schale, deren Innenwand mit einer Vielzahl von ersten Zähnen versehen ist, und einer zweiten Schale, die relativ zur ersten Schale drehbar ist und deren Innenwand mit einer Vielzahl von zweiten Zähnen versehen ist. Ein Zahnrad ist beweglich zwischen der ersten Schale und der zweiten Schale angebracht und greift mit den ersten Zähnen der ersten Schale und den zweiten Zähnen der zweiten Schale ineinander, um die zweite Schale an der ersten Schale zu verriegeln. Ein Druckknopf ist beweglich an der zweiten Schale angebracht und stützt sich auf das Zahnrad, um das Zahnrad zu drücken und zu bewegen, um es von den zweiten Zähnen der zweiten Schale zu lösen, so dass die zweite Schale von der ersten Schale entriegelt wird, so dass die zweite Schale relativ zur ersten Schale drehbar ist. Ein elastisches Element ist zwischen der ersten Schale und dem Zahnrad vorgespannt, um das Zahnrad in Richtung der zweiten Schale und des Druckknopfes zu drücken.
US 6 086 284 A beschreibt eine Verriegelbare Nabenvorrichtung mit einer Basis, die um eine zentrale Achse ein Paar von verriegelbaren Befestigungsringen, ein entsprechendes Paar von Verriegelungs- und Entriegelungselementen und eine obere Kappe aufnimmt. Die gesamte Anordnung ist mittels eines Montageelements gesichert, das sowohl mit der Basis als auch mit der oberen Kappe in Eingriff steht. Die zu verstellenden Gelenke, z. B. die Beine eines Tisches oder einer anderen klappbaren Vorrichtung, werden an einem der verriegelbaren Befestigungsringe befestigt. Der Einfachheit halber ist vorgesehen, dass jedes der Verriegelungs- und Löseelemente so konstruiert ist, dass es sich teilweise durch die von der oberen Kappe definierten Löcher erstreckt, so dass sie verriegelbar in die Kappe eingreifen können, während sie ihre teilweise Ausdehnung durch diese beibehalten, und so, dass das Lösen jedes Elements in ähnlicher Weise wie der Verriegelungsvorgang erreicht werden kann.
US 2003/077111 A1 beschreibt eine Vorrichtung zum Einstellen der Position eines Kinderwagengriffs, die zwei Gehäuse umfasst, die jeweils eine erste Hälfte und eine zweite Hälfte aufweisen, die drehbar mit der ersten Hälfte verbunden ist. Die Gehäuse nehmen jeweils eine Zahnscheibe auf, an der ein Bedienknopf angebracht ist. Die Zahnscheiben haben radiale Zähne und sind jeweils durch eine Feder so auf die Verbindung der Halbteile vorgespannt, dass sie mit den Sperrzähnen des ersten Halbteils und den Zähnen des zweiten Halbteils gleichzeitig in Eingriff kommen, um zu verhindern, dass sich das zweite Halbteil relativ zum ersten Halbteil bewegt. Die zweiten Halbteile können relativ zu den ersten gedreht werden, wenn die Steuerknöpfe betätigt werden, um die gezahnten Scheiben aus dem Eingriff mit den ersten Halbteilen zu bringen, wodurch der Griff eingestellt werden kann.
DE 2 144 454 A1 beschreibt einen Wäschetrockner, der auf zwei gekreuzten Beinen steht, die am Drehpunkt eine Verriegelung haben, um zu verhindern, dass sich der Wäschetrockner unter dem Gewicht der Wäsche zusammenfaltet. Der Riegel besteht aus einem gefederten Zapfen, der in ein Paar Löcher gleitet, die sich beim Öffnen des Wäschetrockners gegenüberliegen. In diesem Zusatz sind die operativen Teile des Verschlusses alle innen, unter rein dekorativen abnehmbaren Kappen. Eine der Kappen ist für den Hebel, der den Entriegelungsknopf des Verschlusses trägt, eingeklinkt und mit einer Markierung versehen, die die Funktionsweise anzeigt.

Die Aufgabe der vorliegenden Erfindung ist es, ausgehend von diesem Stand der Technik, ein Gelenk dahingehend weiterzuentwickeln, dass die sichere Positionierung von Gelenkabschnitten, wie beispielsweise Standbeinen, verbessert wird. Ebenso ist es Aufgabe der vorliegenden Erfindung, einen Wäscheständer mit einem solchen Gelenk bereitzustellen, der sicher und einfach handhabbar ist.

Diese Aufgabe wird durch die Merkmale des Anspruchs 1 sowie die Merkmale des Anspruchs 12 gelöst. Weitere vorteilhafte Ausgestaltungen der Erfindung ergeben sich aus den Unteransprüchen.

Erfindungsgemäss ist vorgesehen, dass bei einem gattungsgemässen Gelenk mit zumindest einem ersten Gelenkabschnitt und einem zweiten Gelenkabschnitt, wobei der erste Gelenkabschnitt und der zweite Gelenkabschnitt gegeneinander um eine Schwenkachse verschwenkbar gelagert sind, in einer Ausgangsposition der erste Gelenkabschnitt über zumindest einen ersten Schieber gegenüber dem zweiten Gelenkabschnitt arretierbar ist. Zudem ist der zumindest eine erste Schieber über eine Betätigungsvorrichtung in eine Freigabeposition bewegbar, so dass der erste Gelenkabschnitt und der zweite Gelenkabschnitt gegeneinander um die Schwenkachse verschwenkbar sind.

Auch wenn im Folgenden Erklärungen zur Funktionsweise des Gelenks auf eine Anwendung des Gelenks für einen Wäscheständer bezogen werden, ist dies beispielhaft zu verstehen und die vorliegende Erfindung hierauf nicht beschränkt. Das erfindungsgemässe Gelenk kann gleichermassen auch für andere Anwendungen vorgesehen werden, wie beispielsweise für Klapptische, Klappstühle oder dergleichen. Ebenso bieten sich weitere Verwendungsmöglichkeiten in Bereichen an, bei denen eine sichere und einfache Handhabung von verschwenkbaren Gelenkabschnitten vorteilhaft ist.

Die Gelenkabschnitte des Gelenks können als zu verschwenkende Funktionskomponenten, wie Standbeine oder dergleichen, ausgebildet oder zur Verbindung mit solchen Funktionskomponenten ausgestaltet sein. In letzterem Fall weisen die Gelenkabschnitte hierzu beispielsweise Bohrungen für Schraubverbindungen auf oder können anderweitige Merkmale zur Verbindung, wie geometrische Ausgestaltungen zum Formschluss oder Materialeigenschaften und Abmessungen zum Einpressen oder zum Stoffschluss, umfassen.

Die verschwenkbare Lagerung der Gelenkabschnitte gegeneinander um eine Schwenkachse bedingt eine feste Lagebeziehung der Gelenkabschnitte in Bezug auf ihren Lagerungspunkt, wobei die Gelenkabschnitte um diesen Lagerungspunkt, also um die Schwenkachse, verschwenkbar sind. Dies kann beispielsweise über einen Zapfen des ersten Gelenkabschnitts realisiert werden, der in eine Aufnahme des zweiten Gelenkabschnitts eingreift. Alternativ können in beide Gelenkabschnitten durchgängige oder zumindest in beide Gelenkabschnitte eingreifende Stiftelemente vorgesehen werden. Insbesondere kann zur verschwenkbaren Lagerung auch die später noch beschriebene Betätigungsvorrichtung genutzt werden. Das Gelenk kann je nach Ausgestaltung eine virtuelle Schwenkachse aufweisen, wenn eine solche Achse indirekt durch Konstruktionselemente gebildet wird, die nicht selbst die Schwenkachse bilden. Wird beispielsweise die Betätigungsvorrichtung so ausgebildet, dass ihr später noch beschriebener Verriegelungsabschnitt nicht zumindest einen Teil der Schwenkachse ausbildet, und die Schwenkbewegung über ebenfalls später noch beschrieben Führungsstifte im Zusammenspiel mit jeweiligen Führungsnuten erfolgt, ist die Schwenkachse des Gelenks virtuell.

In einer Ausgangsposition ist der erste Gelenkabschnitt über zumindest einen ersten Schieber gegenüber dem zweiten Gelenkabschnitt arretierbar, d.h. der erste Gelenkabschnitt und der zweite Gelenkabschnitt sind gegeneinander nicht oder nur im Bereich einer vorgegebenen Toleranz verschwenkbar. Eine solche Ausgangsposition ist insbesondere eine Vorzugsposition der Gelenkabschnitte zueinander. Im Falle eines Wäscheständers wäre dies beispielsweise die Aufbewahrungsposition, bei der sich die Gelenkabschnitte in einer Position befinden, in der die Standbeine eingeklappt, also im Wesentlichen parallel zur Aufhängevorrichtung, sind. Ein Schieber, der der Arretierung der Gelenkabschnitte zueinander dient, ist zur Arretierung beweglich gelagert. Insbesondere führt der Schieber zur Arretierung bzw. der Auflösung der Arretierung eine translatorische Bewegung aus. Alternativ oder ergänzend kann aber auch eine rotatorische Bewegung vorgesehen werden.

Erfindungsgemäss wird der Schieber über eine Betätigungsvorrichtung, wie ein Drück- oder Drehelement, in eine Freigabeposition bewegt, in der der Schieber so positioniert ist, dass die Gelenkabschnitte um die Schwenkachse gegeneinander verschwenkt werden können. Die Betätigungsvorrichtung kann direkt an dem Schieber angreifen oder über Zwischenelemente, wie dies später noch beschrieben wird, auf den Schieber wirken. Im Sinne angetriebener Komponenten ist es ebenso denkbar, dass durch die Betätigungsvorrichtung lediglich ein Signal zur Ansteuerung des entsprechenden Antriebs bereitgestellt wird.

Das vorstehend beschriebene Gelenk ermöglicht es somit, die Gelenkabschnitte in einer vorgegebenen Ausgangsposition in einfacher Weise sicher zu arretieren und die Arretierung über eine Betätigungsvorrichtung zu lösen, so dass die Gelenkabschnitte durch die Bewegung des zumindest einen ersten Schiebers in die Freigabeposition um die Schwenkachse gegeneinander verschwenkt werden können. Das Verschwenken um die Schwenkachse kann somit insbesondere ohne weitere Betätigungskraft erfolgen. Ein unbeabsichtigtes Verschwenken der Gelenkabschnitte aus der Ausgangsposition kann zudem durch die Voraussetzung einer Betätigung der Betätigungsvorrichtung vermieden werden.

Gemäss der vorliegenden Erfindung bilden der erste Gelenkabschnitt und der zweite Gelenkabschnitt einen ersten Überlappungsbereich senkrecht zur Schwenkachse aus, und der zumindest eine erste Schieber ist in dem ersten Gelenkabschnitt oder in dem zweiten Gelenkabschnitt gelagert und dazu ausgebildet, in der Ausgangsposition im ersten Überlappungsbereich in eine durch den jeweils anderen Gelenkabschnitt gebildete erste Aufnahme zur Arretierung einzugreifen. Alternativ oder ergänzend können Überlappungsbereiche auch in einem von 90° abweichenden Winkel zur Schwenkachse vorgesehen werden. Dies kann von Vorteil sein, wenn die Überlappungsbereiche zumindest abschnittsweise als Steuerkulisse genutzt werden.

Der durch den ersten und zweiten Gelenkabschnitt gebildete Überlappungsbereich muss nicht durchgängig sein, sondern kann sich auch aus mehreren Überlappungsabschnitten zusammensetzen, die voneinander beabstandet sind. Beispielsweise können der erste und zweite Gelenkabschnitt im Bereich der Schwenkachse um diese herum jeweils eine Kreisfläche ausbilden, wobei sich die Kreisflächen ausgehend von der Schwenkachse bis zu einem vorgegebenen Radius überlappen. Dieser Überlappungsbereich, der eben auch aus voneinander beabstandeten Überlappungsabschnitten gebildet werden kann, die insgesamt eine, wenn auch unterbrochene Kreisfläche bilden, bildet jeweils auf den einander zugewandten Seiten der Gelenkabschnitte Überlappungsflächen aus. Diese sind, bis auf mögliche Aufnahmen für den zumindest einen Schieber und/oder auch den zumindest einen später beschriebenen Riegel zumindest im Bereich der Bewegungsbahn bzw. der Bewegungsbahnen des Schiebers und/oder Riegels im Wesentlichen parallel zueinander. Wird nun beispielsweise der erste Schieber über die Betätigungsvorrichtung in eine durch den ersten oder zweiten Gelenkabschnitt im Überlappungsbereich vorgesehene Lagerung bewegt, in der sich der erste Schieber in einer Freigabeposition befindet, indem der erste Schieber in der Lagerung des einen Gelenkabschnitts die Verschwenkung des anderen Gelenkabschnitts nicht behindert, so kann die Überlappungsfläche dieses anderen Gelenkabschnitts bei Verschwenkung aus der Ausgangsposition den ersten Schieber in der Lagerung halten. Mit anderen Worten kann die Überlappungsfläche als Niederhalter fungieren, um vorgesehene Riegel und/oder Schieber, die die Riegel in eine Arretierungsposition bewegen können und ggf. selbst zur Arretierung in Aufnahmen eingreifen und dort verbleiben, in einer jeweils neutralen Position zuhalten, in der sie eine Verschwenkbewegung nicht behindern. Alternativ oder ergänzend kann anstelle paralleler Überlappungsflächen zumindest abschnittsweise auch ein variables Abstandsverhältnis vorgesehen werden, beispielsweise in Form einer Steuerkulisse. Bei beabstandeten Überlappungsabschnitten eines Überlappungsbereichs und somit nicht durchgängigen Überlappungsflächen sind die Abstände insbesondere, abgesehen von den möglichen Lagerungen und Aufnahmen, kleiner als die mit der Überlappungsfläche zusammenwirkende Fläche des Schiebers bzw. Riegels, damit der Schieber und/oder Riegel nicht in die Abstände eingreift. Die Lagerung und die Aufnahme können in ihrer Ausgestaltung auch gleich oder ähnlich sein. Die Begrifflichkeiten verdeutlichen lediglich die Unterscheidung in eine Lagerung im Sinne einer Zuordnung des Schiebers zu einem Gelenkabschnitt und dessen Aufnahme für eine Freigabeposition und in eine Aufnahme im Sinne eines zumindest abschnittsweisen Eingriffs des ersten Schiebers zur Arretierung.

Der Eingriff des ersten Schiebers aus einer Lagerung in einem Gelenkabschnitt in die erste Aufnahme des anderen Gelenkabschnitts im Überlappungsbereich zur Arretierung kann durch eine Positions- und/oder Grössenänderung in Bezug auf eine Freigabeposition des Schiebers implementiert werden. Im Sinne einer Grössenänderung wird dann nicht der Schieber insgesamt in eine Arretierungs- oder Freigabeposition bewegt, sondern ein Abschnitt des Schiebers, beispielsweise durch teleskopartiges Aus- und Einfahren des Schiebers.

In einer weiteren Ausgestaltung ist oder sind der zumindest eine erste Schieber und/oder zumindest ein zweiter Schieber, der in dem ersten Gelenkabschnitt oder in dem zweiten Gelenkabschnitt gelagert ist, dazu ausgebildet, in zumindest einer vorbestimmten Schwenkposition im ersten Überlappungsbereich in eine durch den jeweils anderen Gelenkabschnitt gebildete zweite Aufnahme zur Arretierung oder die erste Aufnahme zur Arretierung einzugreifen.

Zunächst wird der Fall betrachtet, bei dem nur der erste Schieber in einer vorbestimmten Schwenkposition, d.h. nach Verschwenken des ersten und zweiten Gelenkabschnitts gegeneinander um die Schwenkachse um einen vorbestimmten Verschwenkwinkel aus seiner Lagerung in einem Gelenkabschnitt in eine zweite Aufnahme des anderen Gelenkabschnitts zur Arretierung oder in die erste Aufnahme des Gelenkabschnitts zur Arretierung eingreift. Letztere Konfiguration entspricht dann einem Verschwenkwinkel von 360°. Bei geforderten Verschwenkwinkeln von kleiner 360° ist bei nur einem ersten Schieber jedoch eine zweite Aufnahme vorzusehen. Ausgehend von der Ausgangsposition des ersten und zweiten Gelenkabschnitts, in der der erste Schieber den ersten Gelenkabschnitt gegenüber dem zweiten Gelenkabschnitt arretiert, wird der erste Schieber durch Betätigung der Betätigungsvorrichtung in eine Freigabeposition bewegt. Die Gelenkabschnitte werden nun gegeneinander verschwenkt, wobei der erste Schieber in der Lagerung des einen Gelenkabschnitts, beispielsweise über die Überlappungsfläche des anderen Gelenkabschnitts, in der Freigabeposition gehalten wird. Mit Erreichen der zweiten Aufnahme, sofern diese vorgesehen ist, oder der ersten Aufnahme greift der erste Schieber in diese ein und arretiert die Gelenkabschnitte zueinander in dem hierüber vorgegebenen Verschwenkwinkel. Somit werden die Gelenkabschnitte nicht nur in einer Ausgangsposition sicher gehalten, sondern können auch in einer vorbestimmten Verschwenkposition arretiert werden.

Alternativ oder ergänzend kann das Gelenk aber auch einen zweiten Schieber vorsehen, der so im ersten Gelenkabschnitt oder zweiten Gelenkabschnitt gelagert ist, dass er nach einem vorbestimmten Verschwenkwinkel entweder in die erste Aufnahme zur Arretierung eingreift oder in eine zweite Aufnahme zur Arretierung. Bei Eingriff in die erste Aufnahme kann für einen Verschwenkwinkel nur eine Aufnahme ausreichend sein. Sofern eine zweite Aufnahme vorgesehen wird, kann die Umsetzung vorgegebener Verschwenkwinkel, beispielsweise unter Berücksichtigung konstruktiver Vorgaben, flexibel realisiert werden. Grundsätzlich können der erste und zweite Schieber und die ihnen jeweils zugeordneten Aufnahmen zur Arretierung unterschiedlich dimensioniert werden, um einen ungewollten Eingriff eines Schiebers in eine ihm nicht zugedachte Aufnahme zu verhindern. Dies schliesst nicht aus, dass eine der Aufnahme zur Arretierung für beide Schieber gedacht sein kann, während eine andere Aufnahme nur mit einem der Schieber in Eingriff kommen kann.

Im Sinne einer erhöhten flexiblen Gestaltungsmöglichkeit oder aber auch im Hinblick auf mehrere Verschwenkwinkel, die stufenweise eingestellt werden können, kann auch eine Kombination zumindest eines ersten und zweiten Schiebers sowie einer ersten und zweiten Aufnahme vorteilhaft sein. Es versteht sich, dass sich solche Kombinationsmöglichkeiten auch auf weitere Schieber und Aufnahme erweitern lassen.

Erfindungsgemäss umfasst das Gelenk zumindest einen dritten Gelenkabschnitt, der gegenüber dem ersten Gelenkabschnitt und/oder zweiten Gelenkabschnitt um die Schwenkachse verschwenkbar ist, und wobei der dritte Gelenkabschnitt und der zweite Gelenkabschnitt einen zweiten Überlappungsbereich senkrecht zur Schwenkachse auf einer dem ersten Überlappungsbereich abgewandten Seite des zweiten Gelenkabschnitts ausbilden, wobei zumindest ein erster Riegel in dem zweiten Gelenkabschnitt oder dem dritten Gelenkabschnitt gelagert und dazu ausgebildet ist, in einer oder der Ausgangsposition im zweiten Überlappungsbereich in eine durch den jeweils anderen Gelenkabschnitt gebildete dritte Aufnahme zur Arretierung einzugreifen und durch das Betätigungselement in eine Entriegelungsposition bewegt zu werden, so dass zumindest der zweite Gelenkabschnitt und der dritte Gelenkabschnitt gegeneinander um eine Schwenkachse verschwenkbar sind.

Der dritte Gelenkabschnitt kann über den ersten Riegel vergleichbar zur Funktionalität des ersten Schiebers gegenüber dem zweiten Gelenkabschnitt in einer Ausgangsposition arretiert und durch die Betätigungsvorrichtung in eine Entriegelungsposition bewegt werden, um ein Verschwenken des dritten Gelenkabschnitts gegenüber dem zweiten Gelenkabschnitt vornehmen zu können. Die Ausgangsposition des dritten Gelenkabschnitts gegenüber dem zweiten Gelenkabschnitt kann mit der Ausgangsposition des zweiten Gelenkabschnitts gegenüber dem ersten Gelenkabschnitt übereinstimmen, aber auch hiervon abweichen. Bei übereinstimmenden Ausgangspositionen werden der zumindest erste Schieber und der zumindest erste Riegel gleichzeitig durch die Betätigungsvorrichtung in die Freigabe- bzw. Entriegelungsposition bewegt. Im Gegensatz dazu wird der erste Riegel bei abweichenden Ausgangspositionen erst dann in eine Entriegelungsposition bewegt, nachdem der erste Schieber in die Freigabeposition bewegt und der zweite Gelenkabschnitt gegenüber dem ersten Gelenkabschnitt verschwenkt wurde. Der entsprechende Verschwenkwinkel kann, muss aber nicht mit einem maximalen oder ersten Verschwenkwinkel, wie er beispielsweise durch einen Eingriff des ersten Schiebers in die zweite Aufnahme beschrieben wurde, übereinstimmen oder anderweitig gewählt werden. Bei übereinstimmenden Ausgangspositionen werden der erste Schieber und der erste Riegel über die Betätigungsvorrichtung gleichzeitig, entweder direkt oder über Zwischenkomponenten, in eine Freigabe- bzw. Entriegelungsposition bewegt. Bei abweichenden Ausgangspositionen kann eine Betätigung durch die Betätigungsvorrichtung zeitlich versetzt erfolgen oder gleichzeitig initiiert, aber zeitlich versetzt umgesetzt werden, wie über mechanisch wirkende Verzögerungsstrecken im konstruktiven Aufbau oder elektrische Zeitschaltglieder bei vorgesehen Antrieben zur Bewegungsumsetzung. Durch abweichende Ausgangspositionen kann ein kontrollierteres Verschwenken der Gelenkabschnitte erfolgen. Anderseits kann es von Vorteil sein, wenn durch übereinstimmende Ausgangspositionen ein schnelleres Verschwenken oder ein vereinfachter Aufbau ermöglicht wird.

Grundsätzlich können die Begriffe "Schieber" und "Riegel" unter dem Begriff "Arretierungselement" zusammengefasst werden. Die vorgenommene begriffliche Unterscheidung dient vornehmlich der übersichtlicheren Zuordnung der Arretierungselemente zu den jeweiligen Gelenkabschnittspaarungen. Im Folgenden ergeben sich auch teilweise unterschiedliche Ausgestaltungsmöglichkeiten für Schieber und Riegel, so dass eine Unterscheidung bei Zusammenwirken der Elemente ebenfalls der vereinfachten Darstellung dient. Sofern sich in bestimmten Konfigurationen gleiche Ausgestaltungen nicht ausschliessen, sind für einen Schieber vorgeschlagene Ausbildungen gleichermassen auf einen Riegel anwendbar und umgekehrt. In diesem Sinne sind auch die Begriffe "Freigabeposition" und "Entriegelungsposition" den jeweiligen Elementen zuzuordnen, ohne dass eine inhaltliche Unterscheidung vorgenommen wird, solange dies nicht explizit Erwähnung findet.

Die allgemeine Konfiguration mit drei Gelenkabschnitten sowie die hierzu beschriebenen Variationsmöglichkeiten bieten eine flexible Ausgestaltung eines Gelenks. Es ergibt sich somit nicht nur eine Verschwenkkonstellation, sondern zumindest zwei Konstellationen, wie dies insbesondere für Wäscheständer und vergleichbare Anwendungen von Vorteil ist. Das Gelenk ist in skalierbarer Ausgestaltung auch auf weitere Gelenkabschnitte erweiterbar, sofern mehr als drei Gelenkabschnitte gegeneinander verschwenkt werden sollen.

In einer Weiterbildung ist oder sind der zumindest eine erste Riegel und/oder ein zumindest zweiter Riegel, der in dem zweiten Gelenkabschnitt oder in dem dritten Gelenkabschnitt gelagert ist, dazu ausgebildet, in zumindest einer vorbestimmten Schwenkposition im zweiten Überlappungsbereich in eine durch den jeweils anderen Gelenkabschnitt gebildete vierte Aufnahme zur Arretierung oder die dritte Aufnahme zur Arretierung einzugreifen.

Mögliche Ausgestaltungen und damit verbundene Vorteile im Hinblick auf den ersten und/der zweiten Riegel in Zusammenwirken mit einer vierten Aufnahme und/oder der dritten Aufnahme im zweiten Überlappungsbereich ergeben sich analog aus der Beschreibung zur Funktionsweise und Varianten im Hinblick auf den ersten Schieber und/oder einen zweiten Schieber in Zusammenwirken mit einer zweiten Aufnahme und/oder der ersten Aufnahme im ersten Überlappungsbereich zwischen dem ersten und zweiten Gelenkabschnitt. Ergänzend zu den direkt übertragbaren Ausführungen sei angemerkt, dass der oder die durch den ersten und/oder zweiten Riegel in Zusammenwirken mit der dritten und/oder vierten Aufnahme realisierte oder die realisierten Verschwenkwinkel des dritten Gelenkabschnitts gegenüber dem zweiten Gelenkabschnitt von dem Verschwenkwinkel oder den Verschwenkwinkeln abweichen können, wie er oder sie durch den ersten und/oder zweiten Schieber zwischen dem ersten und zweiten Gelenkabschnitt vorgesehen sind. Hierüber ergibt sich eine hohe Flexibilität in der Umsetzung gleicher oder verschiedener Schwenkwinkel und deren Anzahl.

Insbesondere sind der zumindest eine erste Schieber, der zumindest eine zweite Schieber, der zumindest eine erste Riegel und/oder der zumindest eine zweite Riegel derart vorgespannt, vorzugsweise über ein Federelement, dass die Vorspannkraft in Richtung der durch den jeweils anderen Gelenkabschnitt gebildeten ersten Aufnahme zur Arretierung, zweiten Aufnahme zur Arretierung, dritten Aufnahme zur Arretierung und/oder vierten Aufnahme zur Arretierung wirkt. Die Federkraft der jeweiligen Federelemente dient insbesondere nur der Verschiebung der Schieber und/oder Riegel. Da diese Elemente bevorzugt zylindrisch sind und formschlüssig zu ihren jeweiligen Aufnahmen und/oder Aussparungen sind, wird in diesem Fall keine zusätzliche Kraft für ihre Arretierungsfunktion benötigt.

Durch die Vorspannkraft wird der jeweils vorgespannte Schieber oder Riegel bei Erreichen einer korrespondierenden Aufnahme automatisch in diese bewegt, so dass er zur Arretierung mit dieser in Eingriff kommen kann. Wird beispielsweise der erste Schieber durch die Betätigungsvorrichtung in eine Freigabeposition bewegt und in dieser Position im ersten Gelenkabschnitt gelagert und durch das Verschwenken des zweiten Gelenkabschnitts gegenüber dem ersten Gelenkabschnitt durch die Überlappungsfläche des zweiten Gelenkabschnitts in der Freigabeposition gehalten, wird der erste Schieber bei Erreichen der nach einem bestimmten Verschwenkwinkel vorgesehenen zweiten Aufnahme durch eine in Richtung des zweiten Gelenkabschnitts wirkende Vorspannkraft zumindest abschnittsweise in die zweite Aufnahme bewegt, so dass eine Arretierung bei diesem Verschwenkwinkel erfolgt. Eine in Richtung des der Lagerung des Schiebers gegenüberliegenden Gelenkabschnitts wirkende Vorspannkraft kann in einfacher Weise über ein zwischen dem Schieber und dem Lagerungsboden angeordnetes Federelement umgesetzt werden. Alternativ zur Anordnung eines Federelements kann der Schieber auch selbst federnd ausgebildet sein. Die zum Schieber beschriebenen Ausführungsvarianten sind gleichermassen auf den Riegel anwendbar. Der automatisierte Eingriff des oder der Schieber bzw. Riegel kann aber auch ohne eine Vorspannkraft über anderweitige mechanische Mittel, wie Hebel oder dergleichen, gelöst werden, wobei Federelemente oder eine federnde Ausführung einen geringen konstruktiven Komplexitätsgrad aufweisen können.

Insbesondere ist der zumindest eine erste Schieber, der zumindest eine zweite Schieber, der zumindest eine erste Riegel und/oder der zumindest eine zweite Riegel in eine der durch den jeweils anderen Gelenkabschnitt gebildeten ersten Aufnahme zur Arretierung, zweiten Aufnahme zur Arretierung, dritten Aufnahme zur Arretierung und/oder vierten Aufnahme zur Arretierung entgegengesetzten Richtung durch die Betätigungsvorrichtung bewegbar.

Demnach wird oder werden der ersten Schieber, zweite Schieber, erste Riegel und/oder zweite Riegel über die Betätigungsvorrichtung und/oder Zwischenelemente translatorisch bewegt, was sich in einfacher Weise umsetzen lässt. Wenn die Betätigungsvorrichtung oder das entsprechende Zwischenelement im Angriffspunkt derart dimensioniert ist, dass der die jeweilige Aufnahme zur Arretierung hierüber in ihrem dem Schieber und/oder Riegel zugewandten Öffnungsbereich abgedeckt wird oder ein dazwischen gebildeter Spalt kleiner als die der Öffnung der jeweiligen Aufnahme zugewandte Fläche des Schiebers und/oder Riegels ist, kann der Schieber und/oder Riegel in seiner jeweiligen Lagerung beim Übergang zu den Überlappungsflächen bei einem Verschwenken sicher gehalten werden.

In einer Ausgestaltung weist oder weisen der erste Gelenkabschnitt, der zweite Gelenkabschnitt und/oder der dritte Gelenkabschnitt zumindest einen Führungsstift auf, der sich von einer einem anderen Gelenkabschnitt zugewandten Seite in Richtung dieser Seite erstreckt und dazu ausgebildet ist, in zumindest einer Führungsnut dieses anderen Gelenkabschnitts geführt zu werden.

Hierdurch erhöht sich die Stabilität und Führungsgenauigkeit des Gelenks. Sofern die zumindest eine Führungsnut in Verschwenkrichtung durch entsprechende Begrenzung der Führungslänge nur einen korrespondierenden Verschwenkwinkel zulässt, kann zudem ein unkontrolliertes Verschwenken bei Ausfall einer vorgesehenen Arretierung verhindert werden. Der zumindest eine Führungsstift kann auch dazu genutzt werden zumindest den ersten und zweiten Gelenkabschnitt, insbesondere den ersten, zweiten und dritten Gelenkabschnitt, entlang der Schwenkachse miteinander zu verbinden. Ebenso kann der zumindest eine Führungsstift in Zusammenwirken mit der für diesen vorgesehenen Führungsnut auch dazu genutzt werden, alternativ oder ergänzend zu anderen Konstruktionselementen des Gelenks, wie beispielsweise der Betätigungsvorrichtung bzw. dem durch diese gebildeten Verriegelungsabschnitt, eine Schwenkachse, genauer gesagt eine virtuelle Schwenkachse auszubilden. Zur Ausbildung einer virtuellen Schwenkachse weist das Gelenk insbesondere mehrere Führungsstifte, beispielsweise drei Führungsstifte, auf, die sich in durch jeweils ihnen zugeordnete Führungsnuten gebildeten Führungsbahnen bewegen können. Die Führungsnuten bzw. Führungsbahnen sind als Kreisbahnabschnitte ausgebildet, die die Verschwenkbewegung um die virtuelle Achse ermöglichen.

In einer Weiterbildung weist die Betätigungsvorrichtung einen Verriegelungsabschnitt auf, der in eine Verriegelungsposition bewegbar und dazu ausgebildet ist, in der Verriegelungsposition zumindest den ersten Schieber in der Freigabeposition und/oder den zweiten Riegel in der Entriegelungsposition halten zu können.

Demnach verbleibt die Betätigungsvorrichtung über den Verriegelungsabschnitt in der Verriegelungsposition. Insbesondere ist ein Betätigungsabschnitt der Betätigungsvorrichtung in Richtung der Schwenkachse an einer dem einen Gelenkabschnitt oder den mehreren Gelenkabschnitten abgewandten Seite eines äusseren Gelenkabschnitts angeordnet. Ein äusserer Gelenkabschnitt bildet den letzten mehrerer entlang der Schwenkachse übereinander um diese angeordneter Gelenkabschnitte eines Gelenks. Bei zwei Gelenkabschnitten kann der Betätigungsabschnitt somit an der dem zweiten Gelenkabschnitt abgewandten Seite des ersten Gelenkabschnitts, insbesondere an der dem ersten Gelenkabschnitt abgewandten Seite des zweiten Gelenkabschnitts angeordnet sein. Bei drei Gelenkabschnitten, wobei der zweite Gelenkabschnitt zwischen dem ersten und dritten Gelenkabschnitt angeordnet ist, kann der Betätigungsabschnitt auf einer dem zweiten Gelenkabschnitt abgewandten Seite des ersten Gelenkabschnitts, insbesondere auf einer dem zweiten Gelenkabschnitt abgewandten Seite des dritten Gelenkabschnitts angeordnet sein. Der Betätigungsabschnitt ist somit gut zugänglich.

Der Verriegelungsabschnitt erstreckt sich insbesondere ausgehend von dem Betätigungsabschnitt in Richtung Schwenkachse durch zumindest eine Teil des Gelenks. Hierdurch ergibt sich eine kompakte Bauweise und der Verriegelungsabschnitt kann zumindest im Bereich der innenliegenden Abschnitte vor äusseren Einflüssen geschützt werden. Wenn durch den Verriegelungsabschnitt gleichzeitig - zumindest abschnittsweise - die Schwenkachse für die Gelenkabschnitte gebildet wird, kann zudem die Anzahl zu verbauender Komponenten für das Gelenk reduziert werden.

In der vorstehenden Ausgestaltung, bei der sich der Verriegelungsabschnitt ausgehend von dem Betätigungsabschnitt in Richtung der Schwenkachse, insbesondere koaxial zur Schwenkachse, zumindest abschnittsweise in das Gelenk erstreckt, wird der Verriegelungsabschnitt durch Bewegung, beispielsweise Drücken, des an einer dem anderen Gelenkabschnitt oder den anderen Gelenkabschnitten abgewandten Seite eines äusseren Gelenkabschnitts angeordneten Betätigungsabschnitts in Richtung des Gelenks in gleicher Richtung in die Verriegelungsposition bewegt. Hierbei kann ein Federelement an dem Verriegelungsabschnitt oder an dem Betätigungsabschnitt derart angreifen, dass der Verriegelungsabschnitt mit dem Betätigungsabschnitt bei Aufhebung der Betätigung oder der Verriegelung in eine der Verriegelungsbewegung entgegengesetzte Richtung gedrängt wird. Dies kann dazu genutzt werden, den Verriegelungsabschnitt mit dem Betätigungsabschnitt nach Lösen der Verriegelung wieder automatisch in seine ursprüngliche Position zu bewegen. Zudem kann aber auch der Verriegelungsabschnitt über die eigentliche Verriegelungsposition hinaus bewegt werden, um für ein leichteres Verschwenken mehr Spiel vorzusehen. Dies kann durch Halten des Betätigungsabschnitts in einer in Richtung des Gelenks untersten Position implementiert sein. Wird der Betätigungsabschnitt beispielsweise in der untersten Position losgelassen, wird der Verriegelungsabschnitt über die Federkraft entgegen der vorherigen Betätigungsrichtung in die eigentliche Verriegelungsposition bewegt.

In einer Ausgestaltung bildet der Verriegelungsabschnitt mit dem ersten Gelenkabschnitt (1), dem zweiten Gelenkabschnitt und/oder dem dritten Gelenkabschnitt in der Verriegelungsposition eine formschlüssige Verbindung aus.

Demnach wird der Verriegelungsabschnitt in dem ersten Gelenkabschnitt, dem zweiten Gelenkabschnitt und/oder dem dritten Gelenkabschnitt formschlüssig in der Verriegelungsposition gehalten. Im Sinne eines vereinfachtet Aufbaus bietet sich ein Formschluss mit einem der Gelenkabschnitte an. Es kann aber auch aus Redundanzgründen und/oder für die Vorsehung mehrerer Verriegelungspositionen von Vorteil sein, wenn der Verriegelungsabschnitt und jeweilige Gelenkabschnitte zum formschlüssigen Eingriff ausgebildet sind.

Insbesondere wird der Verriegelungsabschnitt durch Verschwenken des ersten Gelenkabschnittes, des zweiten Gelenkabschnittes und/oder des dritten Gelenkabschnittes um die Schwenkachse in zumindest einem vorbestimmten ersten Schwenkwinkel aus der Verriegelungsposition bewegt.

Beispielsweise wird der Formschluss zum Halten des Verriegelungsabschnitts in der Verriegelungsposition durch Verschwenken des den Formschluss mit dem Verriegelungsabschnitt aufweisenden Gelenkabschnitts dadurch aufgelöst, dass der Gelenkabschnitt den Formschluss nur über einen vorbestimmten Verschwenkwinkel aufweist. Greift der Verriegelungsabschnitt zum Beispiel in eine durch das erste Gelenk gebildete Nut ein und ist diese unterbrochen, so kann die Verriegelung bei Erreichen der Unterbrechung durch Verschwenken des ersten Gelenkabschnitts oder des Verriegelungsabschnitts aufgelöst werden. Durch die Verwendung des vorgenannten Federelements wird dann beispielsweise der Verriegelungsabschnitt automatisch aus der Verriegelungsposition bewegt. Alternativ kann die Verriegelungsposition aber auch anderweitig aufgelöst werden, wie unter Verwendung einer Steuerkulisse, die den Verriegelungsabschnitt durch Verschwenken aus der Verriegelungsposition bewegt.

Insbesondere ist durch Bewegung des Verriegelungsabschnitts aus der Verriegelungsposition zumindest der erste Gelenkabschnitt gegenüber dem zweiten Gelenkabschnitt (2) oder der zweite Gelenkabschnitt gegenüber dem dritten Gelenkabschnitt in diesem Schwenkwinkel oder durch Vergrösserung des Schwenkwinkels arretierbar.

Da in der Verriegelungsposition zumindest der erste Schieber, der zweite Schieber, der erste Riegel und/oder der zweite Riegel in einer jeweiligen Freigabeposition und/oder Entriegelungsposition gehalten werden können, können der erste Schieber, der zweite Schieber, der erste Riegel und/oder der zweite Riegel nunmehr mit Aufhebung der Verriegelungsposition wieder in entsprechende Aufnahmen zur Arretierung eingreifen. Dies erfolgt, beispielsweise über Ausnutzung einer Vorspannung, bei dem Verschwenkwinkel, bei dem die Verriegelungsposition aufgelöst wird oder bei weiterer Vergrösserung des Verschwenkwinkels, wenn der jeweilige Schieber und/oder Riegel noch über die jeweilige Überlappungsfläche gehalten wird, mit Erreichen der zur Arretierung vorgesehenen Aufnahme. Dies kann auch für die jeweiligen Schieber und/oder Riegel unterschiedlich ausgestaltet sein. Die Gelenkabschnitte können somit sicher in den vorgegebenen Verschwenkpositionen gehalten werden. Zudem steht die Betätigungsvorrichtung in ihrer ursprünglichen Position wieder zum Lösen der Arretierung bereit.

In einer Weiterbildung ist der zumindest eine erste Riegel in einer Durchgangsbohrung des zweiten Gelenkabschnitts gelagert und greift in der Ausgangsposition der erste Schieber ebenfalls in die Durchgangsbohrung ein. Der erste Schieber ist dabei über den ersten Riegel durch die Betätigungsvorrichtung in die Freigabeposition bewegbar.

Durch das Zusammenwirken des zumindest ersten Schiebers mit dem ersten Riegel kann der konstruktive Aufbau vereinfacht werden. Insbesondere muss die Betätigungsvorrichtung den Schieber und Riegel nicht jeweils einzeln betätigen, sondern kann die Betätigung bzw. Bewegung des Riegels zur Betätigung bzw. Bewegung des Schiebers nutzen. Durch die zusätzliche Verwendung zumindest eines zweiten Schiebers und/oder eines zweiten Riegels können dann nach Verschwenken jeweils wieder die bereits beschriebenen Arretierungen nach Erreichen des jeweils vorbestimmten Verschwenkwinkels erfolgen. Alternativ oder ergänzend kann die Arretierung aber auch über den ersten Schieber und/oder ersten Riegel und entsprechende Aufnahmen umgesetzt werden.

Die vorliegende Erfindung ist auch auf einen Wäscheständer mit einer Aufhängevorrichtung, zumindest einem Standbein und zumindest einem vorstehend beschriebenen Gelenk gerichtet, wobei das zumindest eine Standbein über das Gelenk gegenüber der Aufhängevorrichtung ausschwenkbar und arretierbar ist. Der Wäscheständer weist die vorstehend zum Gelenk beschriebenen Vorteile auf.

Merkmale und Zweckmässigkeiten der Erfindung werden nachfolgend auch anhand von Ausführungsbeispielen unter Bezugnahme auf die Zeichnungen beschrieben.

Es zeigt
- Figur 1A :: Eine Draufsicht in Richtung der Schwenkachse auf einen dritten Gelenkabschnitt eines Gelenks mit einem ersten Gelenkabschnitt, einem zweiten Gelenkabschnitt und einem dritten Gelenkabschnitt gemäss einer ersten Ausführungsform der vorliegenden Erfindung in einer Ausgangsposition bei nicht gedrückter Betätigungsvorrichtung;
- Figur 1B :: Eine Querschnittsansicht des Gelenks gemäss Figur 1A entlang der Linie J-J in der Ausgangsposition bei nicht gedrückter Betätigungsvorrichtung;
- Figur 2 :: Eine Querschnittsansicht des Gelenks gemäss Figur 1A entlang der Linie J-J in der Ausgangsposition bei gedrückter Betätigungsvorrichtung;
- Figur 3 :: Eine Querschnittsansicht des Gelenks gemäss Figur 1A entlang der Linie J-J in der Ausgangsposition nach Entlastung der gedrückten Betätigungsvorrichtung;
- Figur 4A :: Eine Draufsicht in Richtung der Schwenkachse auf einen ersten Gelenkabschnitt des Gelenks gemäss der ersten Ausführungsform, wobei der dritte Gelenkabschnitt gegenüber dem ersten Gelenkabschnitt um die Schwenkachse verschwenkt ist;
- Figur 4B :: Eine Detailansicht des in Figur 4A gezeigten Verriegelungsabschnitts ausserhalb des Eingriffs mit dem ersten Gelenkabschnitt zur Auflösung einer Verriegelungsposition;
- Figur 5 :: Eine Draufsicht in Richtung der Schwenkachse auf den dritten Gelenkabschnitt des Gelenks gemäss der ersten Ausführungsform, wobei der erste Gelenkabschnitt, der zweite Gelenkabschnitt und der dritte Gelenkabschnitt gegeneinander verschwenkt sind;
- Figur 6 :: Eine Querschnittsansicht des Gelenks gemäss Figur 5 entlang der Linie O-O bei nicht gedrückter Betätigungsvorrichtung;
- Figur 7 :: Eine Querschnittsansicht des Gelenks gemäss Figur 5 entlang der Linie O-O bei gedrückter Betätigungsvorrichtung;
- Figur 8 :: Eine perspektivische Ansicht eines Wäscheständers mit einer Aufhängevorrichtung und Standbeinen, die über jeweilige Gelenke gemäss der Figuren 1A bis 7 gegeneinander verschwenkbar sind.

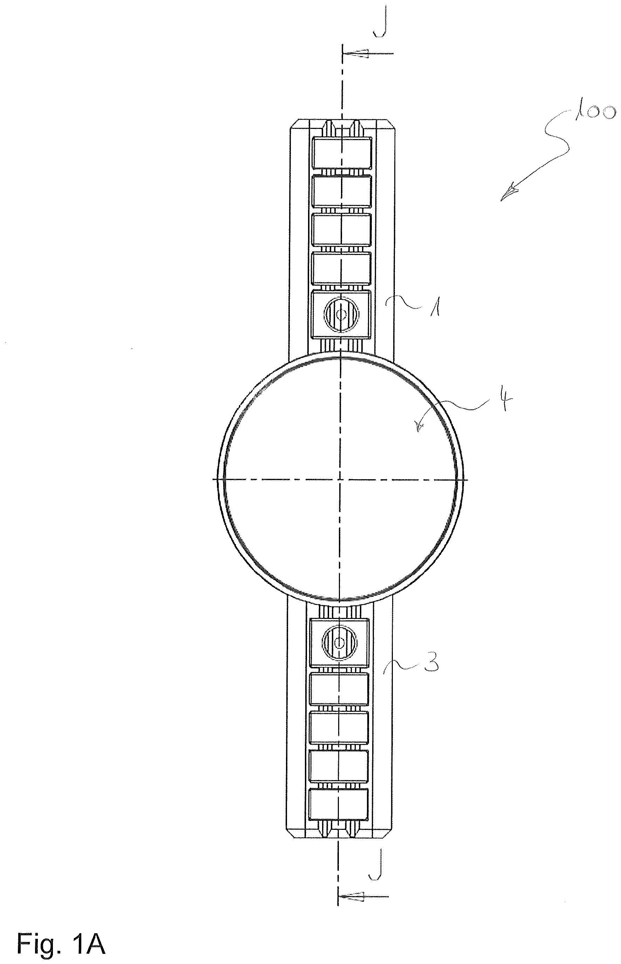

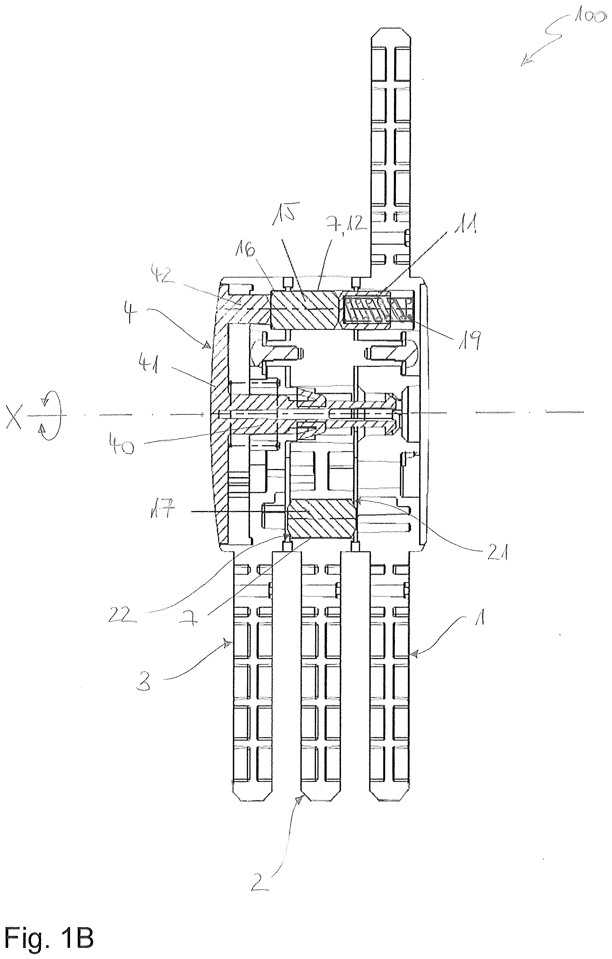

Figur 1A zeigt eine Draufsicht in Richtung der Schwenkachse X (Figur 1B) auf einen dritten Gelenkabschnitt 3 eines Gelenks 100 mit einem ersten Gelenkabschnitt 1, einem zweiten Gelenkabschnitt 2 und einem dritten Gelenkabschnitt 3 gemäss einer ersten Ausführungsform der vorliegenden Erfindung in einer Ausgangsposition bei nicht gedrückter Betätigungsvorrichtung 4. Der erste Gelenkabschnitt 1, der zweite Gelenkabschnitt 2 und der dritte Gelenkabschnitt 3 liegen in Richtung der Schwenkachse X übereinander und bilden jeweils im Bereich der Betätigungsvorrichtung 4 einen kreisförmigen Flächenbereich aus, von dem sich im Fall des ersten Gelenkabschnitts 1 zwei Befestigungsabschnitte zur Befestigung an einer Funktionskomponente senkrecht zur Schwenkachse, hier jeweils gegenüberliegend, erstrecken (Figur 1B). Der zweite und dritte Gelenkabschnitt 2, 3 weisen jeweils einen Befestigungsabschnitt auf. In der gezeigten Ausgangsposition sind der Befestigungsabschnitt des zweiten Gelenkabschnitts 2 und der Befestigungsabschnitt des dritten Gelenkabschnitts 3 in Überdeckung mit einem der Befestigungsabschnitte des ersten Gelenkabschnitts 1 ausgerichtet. Entsprechend ist in der Draufsicht in Figur 1A lediglich der dritte Gelenkabschnitt 3 mit der darin aufgenommenen Betätigungsvorrichtung 4 und der Befestigungsabschnitt des ersten Gelenkabschnitts 1 erkennbar.

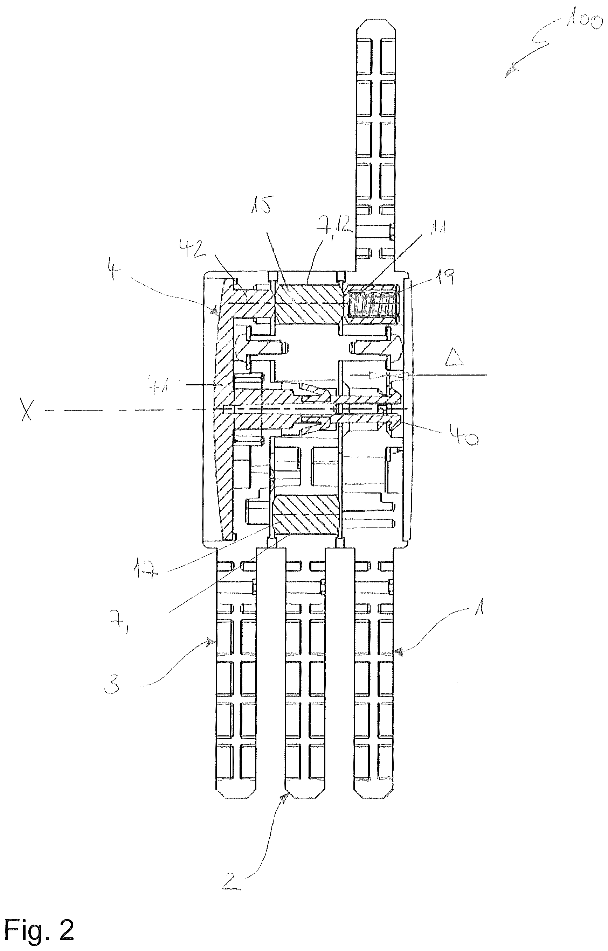

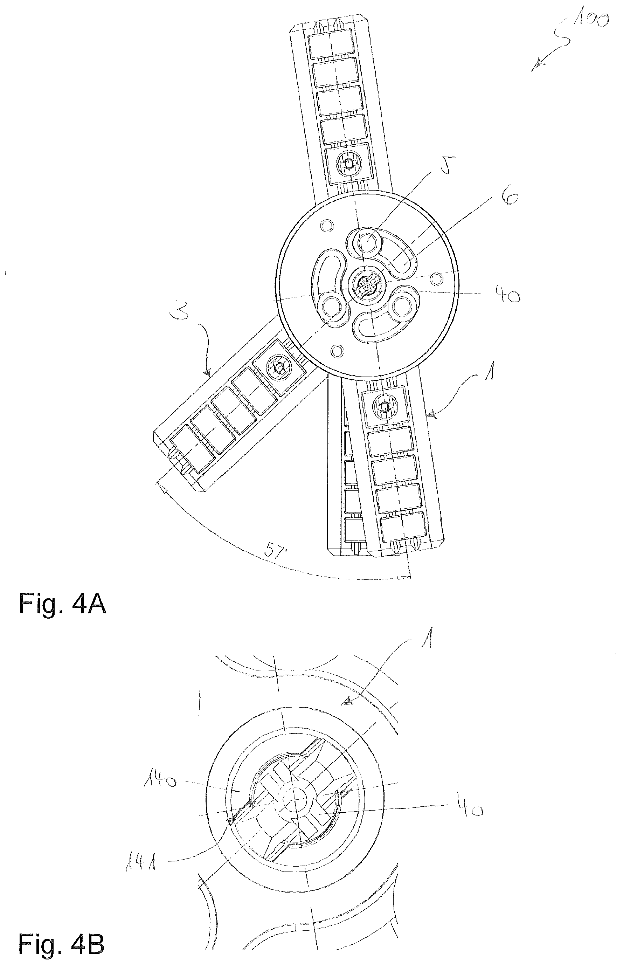

In Figur 1B ist das Gelenk 100 in einer Querschnittsansicht entlang der Linie J-J gemäss Figur 1A in der Ausgangsposition bei nicht gedrückter Betätigungsvorrichtung 4 dargestellt. Die Betätigungsvorrichtung 4 weist einen Betätigungsabschnitt 41 auf, über den die Betätigungsvorrichtung 4 betätigt wird. Zudem erstreckt sich durch das Gelenk 100 in Richtung der Schwenkachse X ein Verriegelungsabschnitts 40, der gleichzeitig die Schwenkachse X für den dritten Gelenkabschnitt 3, den zweiten Gelenkabschnitt 2 und den ersten Gelenkabschnitt 1, die sich in der angegebenen Reihenfolge in Richtung der Schwenkachse X der Betätigungsvorrichtung 4 anschliessen, bildet bzw. zu der Schwenkachse X koaxial verläuft. Die Schwenkachse X muss aber nicht durch den Verriegelungsabschnitt 40 gebildet werden, sondern kann, wie dies zu Figur 4A noch beschrieben wird, ergänzend durch die Führungsstifte 5 in Zusammenwirken mit den Führungsnuten 6 als virtuelle Schwenkachse ausgebildet werden. Das dem Betätigungsabschnitt 41 abgewandte Ende des Verriegelungsabschnitts 40 wird durch zwei gegenüberliegende Schnapphaken gebildet. Zudem weist die Betätigungsvorrichtung ein Betätigungselement 42 auf, durch das der erste Riegel 15 in eine Entriegelungsposition und der erste Schieber 11 in eine Freigabeposition bewegbar ist, wie dies noch anhand von Figur 2 beschrieben wird.

Der erste Schieber 11 ist in einer Aussparung des ersten Gelenkabschnitts 1 gelagert und in der Aussparung über eine Federelement 19 geführt. In der in Figur 1B gezeigten Ausgangsposition bei nicht gedrückter Betätigungsvorrichtung 4 wird der erste Schieber 11 über das Federelement 19 in einer durch die Durchgangsbohrung 7 gebildeten ersten Aufnahme 12 des zweiten Gelenkabschnitts 2 gehalten, so dass der erste Gelenkabschnitt 1 gegenüber dem zweiten Gelenkabschnitt 2 arretiert ist. In der Durchgangsbohrung 7 des zweiten Gelenkabschnitts 2 befindet sich zudem auf der dem Federelement 19 abgewandten Seite des ersten Schiebers 11 ein erster Riegel 15. Der erste Riegel 15 ist so dimensioniert, dass er in der dargestellten Position des ersten Schiebers 11, d.h. wenn der erste Schieber 11 zur Arretierung in die erste Aufnahme 12 eingreift, in die in dem dritten Gelenkabschnitt 3 gebildete dritte Aufnahme 16 eingreift. Hierüber wird der zweite Gelenkabschnitt 2 gegenüber dem dritten Gelenkabschnitt 3 arretiert.

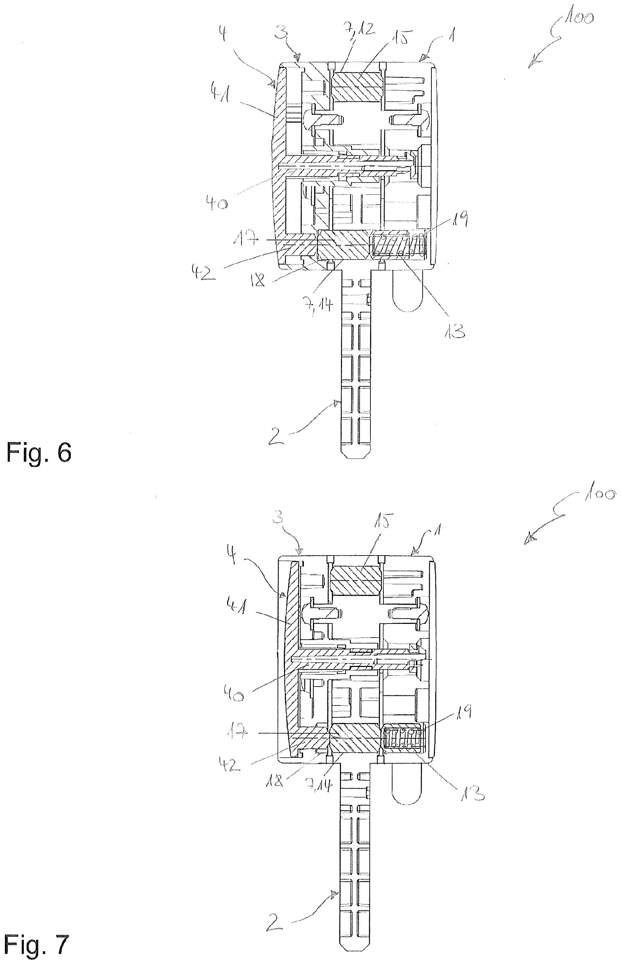

Zudem weist der zweite Gelenkabschnitt 2 eine weitere Durchgangsbohrung 7 auf, in der ein zweiter Riegel 17 gelagert ist. Der zweite Riegel wird im ersten Überlappungsbereich 21 durch die Überlappungsfläche des ersten Gelenkabschnitts 1 in einer Position gehalten, in der zweite Schieber 17 das Verschwenken des ersten Gelenklabschnitts 1 nicht behindert. Gleichermassen wird der zweite Riegel 17 aber auch im zweiten Überlappungsbereich 22 durch die Überlappungsfläche des dritten Gelenkabschnitts 3 in einer Position gehalten, in der der zweite Schieber 17 das Verschwenken des dritten Gelenklabschnitts 3 nicht behindert. Letztlich weist das Gelenk 100 noch einen in dem ersten Gelenkabschnitt 1 gelagerten zweiten Schieber 13 auf, der wie der erste Schieber 11 über ein Federelement 19 in einer im ersten Gelenkabschnitt 1 gebildeten Aussparung geführt wird. Der zweite Schieber 13 ist aufgrund seiner Lage ausserhalb der Schnittansicht in Figur 1B nicht erkennbar und wird unter Bezugnahme auf die Figuren 6 und 7 später noch beschrieben werden.

Wird nun auf den Betätigungsabschnitt 41 ein Druckkraft in Richtung der Gelenkabschnitte 1, 2 und 3 ausgeübt, so bewegt sich die Betätigungsvorrichtung 4 aus ihrer in Figur 1B gezeigten Position entlang der Schwenkachse in Kraftrichtung, bis der Betätigungsabschnitt 41 einen durch den bzw. in dem dritten Gelenkabschnitt gebildeten Anschlag erreicht, wie dies in Figur 2 dargestellt ist. Durch die Betätigung der Betätigungsvorrichtung 4 wird der erste Riegel 15 durch das Betätigungselement 42 in Richtung des ersten Gelenkabschnitts 1 bewegt und drückt dabei den ersten Schieber 11 entgegen der Federkraft des Federelements 19 in die Lagerung im ersten Gelenkabschnitt 1. Der erste Riegel 15 befindet sich dadurch in einer Entriegelungsposition und der erste Schieber 11 in einer Freigabeposition. Zudem werden die Schnapphaken des Verriegelungsabschnitts 40 durch einen Breitenabschnitt eines Spalts 141 im ersten Gelenkabschnitt 1 bewegt, bei dessen Durchlaufen sie zunächst zusammengedrückt und nach dessen Durchlaufen wieder auseinandergehen, so dass die Schnapphaken des Verriegelungsabschnitt 40 in der Ausgangsposition den Spalt 141 in rückwärtiger Bewegung nicht mehr Durchlaufen können. Die Spaltbegrenzungen in Breitenrichtung, also die Spaltbegrenzungen mit kleinerem Abstand gegenüber den Spaltbegrenzungen mit grösserem Abstand in Längenrichtung, bilden somit Verriegelungsflächen 140 für die Schnapphaken des Verriegelungsabschnitts 40 in der Ausgangsposition. In dem gezeigten Ausführungsbeispiel liegen die Schnapphaken im vollständig eingedrückten Zustand der Betätigungsvorrichtung 4 mit ihren Halteflächen nicht an den durch den Spalt 141 gebildeten Verriegelungsflächen 140 an, sondern sind in Richtung der Schwenkachse hiervon beabstandet. Dieser Abstand Δ bildet ein Spiel aus, so dass sich die Gelenkabschnitte 1, 2 und 3 leichter verschwenken lassen. Der Abstand Δ ist zudem dazu vorgesehen, das sichere Rasten der Schnapphaken zu gewährleisten.

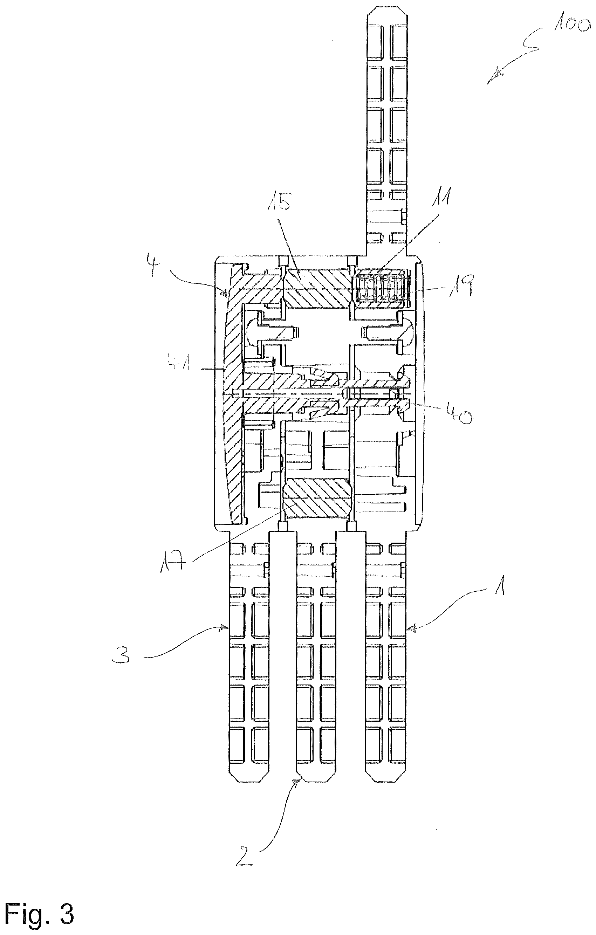

In Figur 3 ist ein Zustand gezeigt, nachdem die Betätigungsvorrichtung 4 in der Ausgangsposition nach der Betätigung entlastet wird. Durch ein entgegen der Betätigung wirkendes Federelement wird die Betätigungsvorrichtung 4 entgegen ihrer Betätigungsrichtung bewegt. Diese Bewegung wird nach Überwindung des Abstands Δ durch die Auflage der Halteflächen der Schnapphaken des Verriegelungsabschnitts 40 an den dafür vorgesehenen Verriegelungsflächen 140 des ersten Gelenkabschnitts 1 gestoppt. Die Riegel 15 und 17 sowie die Schieber 11 und 13 sind in diesem Zustand derart angeordnet, dass ein optimales Verschwenken ermöglicht wird. Die Gelenkabschnitte 1, 2 und 3 sind immer noch verschwenkbar, können aber in dieser Position der Betätigungsvorrichtung stärker gegeneinander verspannt sein. Da sich auch das Betätigungselement 42 gleichermassen um den Abstand Δ entgegen der Betätigungsrichtung bewegt und das Federelement 19 den ersten Schieber 11 ebenfalls in die der Betätigung entgegengesetzte Richtung drängt, verändert sich die Position des ersten Schiebers 11 und somit des ersten Riegels 15 in Richtung der Federkraft um den Betrag des Abstands Δ. Damit sich der erste Schieber 11 und der erste Riegel 15 trotz dieser Positionsveränderung weiterhin in einer Freigabeposition bzw. Entriegelungsposition befinden, ist der Abstand zwischen den Überlappungsflächen in den Überlappungsbereichen 21 und 22 so ausgelegt, dass er zumindest dem Abstand Δ zwischen den Halteflächen der Schnapphaken und der jeweiligen Verriegelungsfläche 140 des ersten Gelenkabschnitts 1 im vollständig eingedrückten Zustand der Betätigungsvorrichtung 4 entspricht.

Figur 4A zeigt nun eine Draufsicht in Richtung der Schwenkachse auf einen ersten Gelenkabschnitt 1 des Gelenks 100 gemäss der ersten Ausführungsform, wobei der dritte Gelenkabschnitt 3 gegenüber dem ersten Gelenkabschnitt um die Schwenkachse verschwenkt ist. Der Verschwenkwinkel beträgt hier 57°. Durch das Verschwenken um 57° werden die Schnapphaken des Verriegelungsabschnitts 40 ausser Eingriff mit den Verriegelungsflächen 140 gebracht, wie dies noch unter Bezugnahme auf Figur 4B beschrieben wird. Der Verriegelungsabschnitt 40 und dadurch die Betätigungsvorrichtung 4 werden somit nicht mehr über die Verriegelungsflächen 140 in der Verriegelungsposition gehalten und über ein Federelement in die ursprüngliche Position bei nicht betätigter Betätigungsvorrichtung 4 zurückbewegt. Der erste Schieber 11, der zweite Schieber 13, der erste Riegel 15 und der zweite Riegel 17 befinden sich dennoch in ihrer jeweiligen Freigabeposition bzw. Entriegelungsposition, da sie durch die Überlappungsflächen in dieser jeweiligen Position gehalten werden.

Zudem zeigt Figur 4A drei Führungsstifte 5, die in jeweiligen Führungsnuten 6 geführt werden. Durch die durch die Führungsnuten 6 gebildeten Führungsabschnitte erfolgt eine Begrenzung des möglichen Verschwenkwinkels des ersten Gelenkabschnitts 1 gegenüber dem zweiten Gelenkabschnitt 2, so dass selbst bei einer Funktionsstörung des ersten Schiebers 11 und/oder des zweiten Schiebers 13 ein unbeabsichtigtes Verschwenken über einen maximalen Verschwenkwinkel hinaus verhindert werden kann.

Figur 4B zeigt eine Detailansicht des in Figur 4A gezeigten Verriegelungsabschnitts 40 ausserhalb des Eingriffs mit dem ersten Gelenkabschnitt 1 zur Auflösung einer Verriegelungsposition. Die Schnapphaken des Verriegelungsabschnitts 40 sind durch das Verschwenken nun in Längenrichtung des Spalts 141 ausgerichtet. Die Länge des Spalts 141 ist dabei etwas länger als der Abstand der einander gegenüberliegenden und voneinander abgewandten Enden der Schnapphaken. Ebenso ist die Spaltbreite entsprechend so eingestellt, dass eine Bewegung des Verriegelungsabschnitts in Richtung der Schwenkachse entgegen der Betätigungsrichtung nicht behindert wird. Der Spalt 141 ist hier nicht rechteckig ausgebildet, sondern weist Konturabschnitte auf, die zur Kontur des Verriegelungsabschnitts 40 mit den Schnapphaken im Bereich der Verriegelung korrespondieren, um den Verriegelungsabschnitt 40 in der Ausgangsposition und über einen vorbestimmten Verschwenkwinkel in der Verriegelungsposition halten und mit Erreichen des vorbestimmten Verschwenkwinkels die Verriegelungsposition auflösen zu können.

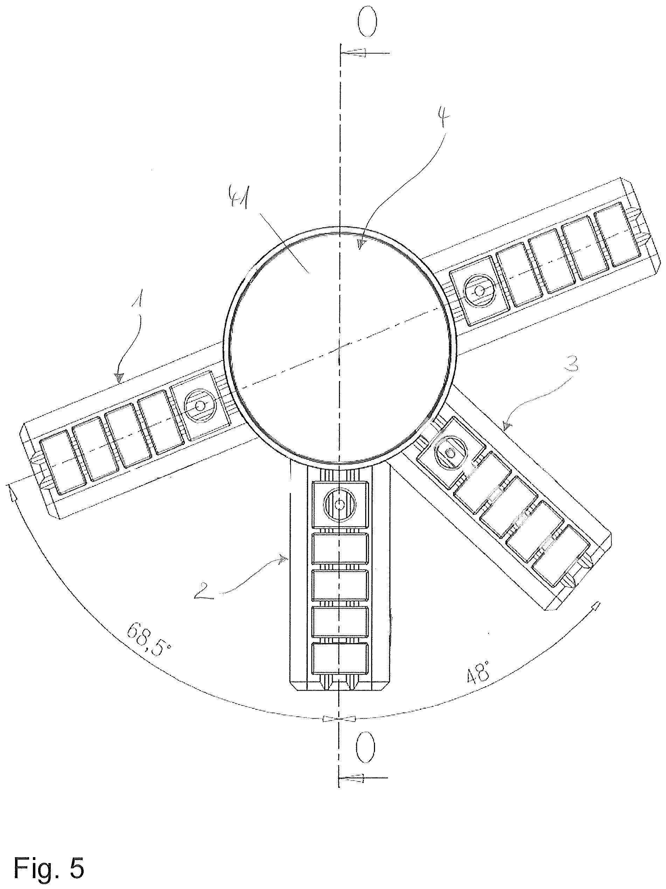

Figur 5 zeigt eine Draufsicht in Richtung der Schwenkachse X auf den dritten Gelenkabschnitt 3 des Gelenks 100 gemäss der ersten Ausführungsform, wobei der erste Gelenkabschnitt 1, der zweite Gelenkabschnitt 2 und der dritte Gelenkabschnitt 3 ausgehend von der Konfiguration gemäss Figur 4A gegeneinander verschwenkt sind. Die Betätigungsvorrichtung 4 befindet sich hier unverändert in der Position wie in Figur 4A.

Gegenüber Figur 4A wurde der dritte Gelenkabschnitt 3 gegenüber dem ersten Gelenkabschnitt 1 in Figur 5 auf nun insgesamt 116,5° und der zweite Gelenkabschnitt 2 gegenüber dem ersten Gelenkabschnitt um 68,5° verschwenkt, d.h. der zweite Gelenkabschnitt 2 und der dritte Gelenkabschnitt 3 sind gegeneinander um 48° verschwenkt.

Figur 6 stellt eine Querschnittsansicht des Gelenks 100 gemäss Figur 5 entlang der Linie O-O bei nicht gedrückter Betätigungsvorrichtung dar. In den in Figur 5 veranschaulichten Positionsbeziehungen des ersten Gelenkabschnitts 1, des zweiten Gelenkabschnitts 2 und des dritten Gelenkabschnitts 3 zueinander sind der zweite Schieber 13, die Durchgangsbohrung 7 und somit die zweite Aufnahme 14 und der zweite Riegel 17, die vierte Aufnahme 18 sowie das Betätigungselement 42 in Richtung der Schwenkachse X koaxial zueinander ausgerichtet. Infolgedessen wird der zweite Schieber 13 durch das Federelement 19 aus dem ersten Gelenkabschnitt 1 teilweise in die durch die Durchgangsbohrung 7 gebildete zweite Aufnahme 14 des zweiten Gelenkabschnitts 2 bewegt, wodurch der zweite Riegel 17 aus dem zweiten Gelenkabschnitt 2 in die vierte Aufnahme 18 des dritten Gelenkabschnitts 3 bewegt wird. Der erste Gelenkabschnitt 1 ist gegenüber dem zweiten Gelenkabschnitt 2 durch den zweiten Schieber 13 arretiert, während der zweite Gelenkabschnitt 2 gegenüber dem dritten Gelenkabschnitt 3 durch den zweiten Riegel 17 arretiert wird. Demnach ist das Gelenk 100 insgesamt mit Erreichen der jeweiligen Verschwenkwinkel gemäss Figur 5 automatisch arretiert.

Zur Beschreibung der Aufhebung der Arretierung zeigt Figur 7 eine Querschnittsansicht des Gelenks 100 gemäss Figur 5 entlang der Linie O-O bei gedrückter Betätigungsvorrichtung. Vergleichbar zur Betätigung der Betätigungsvorrichtung gemäss Figur 2 wird hier nun der zweite Riegel 17 durch das Betätigungselement 42 in seine Entriegelungsposition in Betätigungsrichtung bewegt, wodurch der zweite Schieber 13 wiederum entgegen der Federkraft des Federelements 19 in seine Freigabeposition bewegt wird. Durch leichtes Verschwenken des zweiten Gelenkabschnitts 2 und des dritten Gelenkabschnitts 3 kann die Betätigungsvorrichtung in der Verriegelungsposition gehalten werden. Die Gelenkabschnitte 1, 2 und 3 können somit wieder in ihre Ausgangsposition zurückbewegt werden. Während des Zurückbewegens in die Ausgangsposition durchlaufen die Schnapphaken des Verriegelungsabschnitts 40 wieder den Spalt 141, so dass die Betätigungsvorrichtung 4 wieder in ihre ursprüngliche Position im nicht gedrückten Zustand durch ein Federelement zurückbewegt wird. Mit Erreichen der Ausgangsposition ergibt sich folglich die in Figur 1B gezeigte Konstellation, so dass das Gelenk 100 insgesamt wieder automatisch in der Ausgangsposition arretiert wird, d.h. der erste Schieber 11 greift über das Federelement 19 teilweise in die durch die Durchgangsbohrung 7 gebildete erste Aufnahme des zweiten Gelenkabschnitts 2 und bewegt dabei den ersten Riegel 15 in die dritte Aufnahme 16 des dritten Gelenkabschnitts 3.

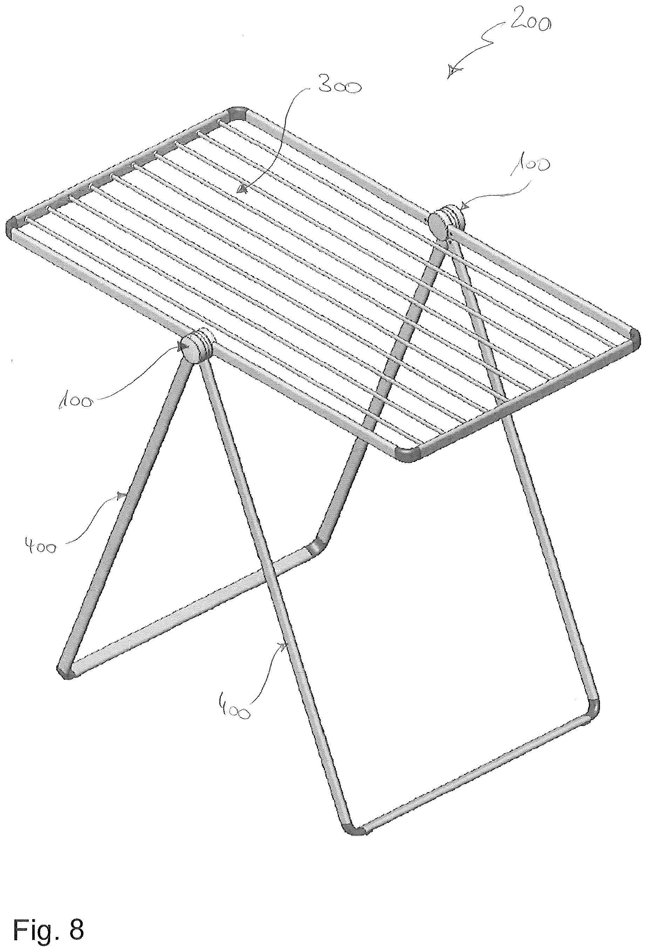

Als ein erfindungsgemässes Anwendungsbeispiel zeigt Figur 8 eine perspektivische Ansicht eines Wäscheständers 200 mit einer Aufhängevorrichtung 300 und zwei Standbeinen 400, die über jeweils ein beiderseitig der Aufhängevorrichtung 300 angeordnetes Gelenk 100 gemäss der Figuren 1A bis 7 gegeneinander verschwenkbar sind. Der Wäscheständer 200 weist hier einen Zustand auf, in dem die Gelenkabschnitte 1, 2, und 3 bereits verschwenkt wurden. Bezogen auf die Gelenke 100 entspricht dies dem in Figur 6 veranschaulichten Zustand.

Die Befestigungsabschnitte des ersten Gelenkabschnitts 1 des jeweiligen Gelenks 100 sind hier biederseitig mit dem Rahmen der Aufhängevorrichtung 300 verbunden. Der Befestigungsabschnitt des zweiten Gelenkabschnitts 2 des jeweiligen Gelenks 100 ist mit je einem offenen Ende des einen U-förmigen Standbeins 400 verbunden, während der Befestigungsabschnitt des dritten Gelenkabschnitts 3 des jeweiligen Gelenks 100 mit je einem offenen Ende des anderen U-förmigen Standbeins 400 verbunden ist. Die Standbeine 400 lassen sich somit aus einer Ausgangsposition, in der der Wäscheständer 200 eingeklappt ist, also die Standbeine 400 in oder nahezu in einer Ebene mit der Aufhängevorrichtung 300 durch die Gelenke 100 arretiert sind, durch beiderseitiges Betätigen der jeweiligen Betätigungsvorrichtung 4 und damit Lösen der Arretierung ausklappen. Das Verschwenken der Standbeine kann insbesondere durch vollständiges Durchdrücken des Betätigungsabschnitts 41 und somit das gegebene Spiel durch den Abstand Δ bei entsprechender Ausrichtung des Wäscheständers 200 vollständig durch die eigene Gewichtskraft der Standbeine 400 erfolgen oder der Ausklappvorgang hierdurch zumindest unterstützt werden. Die Betätigungsvorrichtung 4 muss demnach zum Verschwenken der Standbeine nicht vollständig gedrückt sein, sondern kann durch die Schnapphaken in der Verriegelungsposition gehalten werden. Entsprechend sind die Hände eines Nutzers frei, um beispielsweise das Verschwenken selbst vorzunehmen oder den Wäscheständer in einer geeigneten Position zu halten. Mit Erreichen der vorbestimmten Verschwenkwinkel, wie in Figur 8 gezeigt, werden die Gelenke automatisch arretiert. Ein Lösen der Arretierung zum Einklappen des Wäscheständers 200 erfolgt wiederum durch nochmaliges beiderseitiges Betätigen der Betätigungsvorrichtung 4 der Gelenke 100. Durch die beiderseitige Betätigung der Betätigungsvorrichtungen 4 der Gelenke 100 wird eine unbeabsichtigte Aufhebung der Arretierung verhindert oder zumindest eine Wahrscheinlichkeit hierfür verringert.

Die Erfindung ist nicht auf die beschriebenen Ausführungsformen beschränkt. Auch wenn der erste Gelenkabschnitt der beschriebenen Ausführungsform zwei Befestigungsabschnitte aufweist, kann der erste Gelenkabschnitt auch eine hiervon abweichende Anzahl von Befestigungsabschnitte aufweisen. Auch müssen die Befestigungsabschnitte nicht gleichmässig am Flächenumfang senkrecht zur Schwenkachse verteilt sein, sondern können auch ungleichmässige Abstände aufweisen. Dies gilt gleichermassen für andere Gelenkabschnitte. Zudem sind die quantitativ angegebenen Verschwenkwinkel beispielhaft zu verstehen und können je nach Konfigurationserfordernissen durch entsprechende Lage der Schieber und/oder Riegel und dazu korrespondierender Aufnahmen angepasst werden. Auch kann ein Wäscheständer nur ein erfindungsgemässes Gelenk aufweisen, insbesondere, wenn ein solches Gelenk so ausgelegt ist, dass der Wäscheständer in einem eingeklappten Zustand ausreichend sicher gehalten werden kann.

## Patentansprüche

1. Gelenk (100) mit zumindest einem ersten Gelenkabschnitt (1) und einem zweiten Gelenkabschnitt (2),
wobei der erste Gelenkabschnitt (1) und der zweite Gelenkabschnitt (2) gegeneinander um eine Schwenkachse (X) verschwenkbar gelagert sind, und
wobei in einer Ausgangsposition der erste Gelenkabschnitt (1) über zumindest einen ersten Schieber (11) gegenüber dem zweiten Gelenkabschnitt (2) arretierbar ist, und
wobei der zumindest eine erste Schieber (11) über eine Betätigungsvorrichtung (4) in eine Freigabeposition bewegbar ist, so dass der erste Gelenkabschnitt (1) und der zweite Gelenkabschnitt (2) gegeneinander um die Schwenkachse (X) verschwenkbar sind,
**dadurch gekennzeichnet, dass**
der erste Gelenkabschnitt (1) und der zweite Gelenkabschnitt (2) einen ersten Überlappungsbereich (21) senkrecht zur Schwenkachse (X) ausbilden und der zumindest eine erste Schieber (11) in dem ersten Gelenkabschnitt (1) oder in dem zweiten Gelenkabschnitt (2) gelagert und dazu ausgebildet ist, in der Ausgangsposition im ersten Überlappungsbereich (21) in eine durch den jeweils anderen Gelenkabschnitt (1, 2) gebildete erste Aufnahme (12) zur Arretierung einzugreifen,
wobei das Gelenk (100) zumindest einen dritten Gelenkabschnitt (3) umfasst, der gegenüber dem ersten Gelenkabschnitt (1) und/oder zweiten Gelenkabschnitt (2) um die Schwenkachse (X) verschwenkbar ist, und wobei der dritte Gelenkabschnitt (3) und der zweite Gelenkabschnitt (2) einen zweiten Überlappungsbereich (22) senkrecht zur Schwenkachse (X) auf einer dem ersten Überlappungsbereich (21) abgewandten Seite des zweiten Gelenkabschnitts (2) ausbilden, wobei zumindest ein erster Riegel (15) in dem zweiten Gelenkabschnitt (2) oder dem dritten Gelenkabschnitt (3) gelagert und dazu ausgebildet ist, in einer oder der Ausgangsposition im zweiten Überlappungsbereich (22) in eine durch den jeweils anderen Gelenkabschnitt (2, 3) gebildete dritte Aufnahme (16) zur Arretierung einzugreifen und durch das Betätigungselement (4) in eine Entriegelungsposition bewegt zu werden, so dass zumindest der zweite Gelenkabschnitt (2) und der dritte Gelenkabschnitt (3) gegeneinander um eine Schwenkachse verschwenkbar sind.

2. Gelenk (100) nach Anspruch 1, wobei der zumindest eine erste Schieber (11) und/oder zumindest ein zweiter Schieber (13), der in dem ersten Gelenkabschnitt (1) oder in dem zweiten Gelenkabschnitt (2) gelagert ist, dazu ausgebildet ist oder sind, in zumindest einer vorbestimmten Schwenkposition im ersten Überlappungsbereich (21) in eine durch den jeweils anderen Gelenkabschnitt (1, 2) gebildete zweite Aufnahme (14) zur Arretierung oder die erste Aufnahme (12) zur Arretierung einzugreifen.

3. Gelenk (100) nach Anspruch 2, wobei der zumindest eine erste Riegel (15) und/oder ein zumindest zweiter Riegel (17), der in dem zweiten Gelenkabschnitt (2) oder in dem dritten Gelenkabschnitt (3) gelagert ist, dazu ausgebildet ist oder sind, in zumindest einer vorbestimmten Schwenkposition im zweiten Überlappungsbereich (22) in eine durch den jeweils anderen Gelenkabschnitt (2, 3) gebildete vierte Aufnahme (18) zur Arretierung oder die dritte Aufnahme (16) zur Arretierung einzugreifen.

4. Gelenk (100) nach einem der Ansprüche 1 bis 3, wobei der zumindest eine erste Schieber (11), der zumindest eine zweite Schieber (13), der zumindest eine erste Riegel (15) und/oder der zumindest eine zweite Riegel (17) derart vorgespannt sind, vorzugsweise über eine Federelement (19), dass die Vorspannkraft in Richtung der durch den jeweils anderen Gelenkabschnitt (1, 2, 3) gebildeten ersten Aufnahme (12) zur Arretierung, zweiten Aufnahme (14) zur Arretierung, dritten Aufnahme (16) zur Arretierung und/oder vierten Aufnahme (18) zur Arretierung wirkt.

5. Gelenk (100) nach einem der Ansprüche 1 bis 4, wobei der zumindest eine erste Schieber (11), der zumindest eine zweite Schieber (13), der zumindest eine erste Riegel (15) und/oder der zumindest eine zweite Riegel (17) in eine der durch den jeweils anderen Gelenkabschnitt (1, 2, 3) gebildeten ersten Aufnahme (12) zur Arretierung, zweiten Aufnahme (14) zur Arretierung, dritten Aufnahme (16) zur Arretierung und/oder vierten Aufnahme (18) zur Arretierung entgegengesetzten Richtung durch die Betätigungsvorrichtung (4) bewegbar ist.

6. Gelenk (100) nach einem der Ansprüche 1 bis 5, wobei der erste Gelenkabschnitt (1), der zweite Gelenkabschnitt (2) und/oder der dritte Gelenkabschnitt (3) zumindest einen Führungsstift (5) aufweist oder aufweisen, der sich von einer einem anderen Gelenkabschnitt (1, 2, 3) zugewandten Seite in Richtung dieser Seite erstreckt und dazu ausgebildet ist, in zumindest einer Führungsnut (6) dieses anderen Gelenkabschnitts (1, 2, 3) geführt zu werden.

7. Gelenk (100) nach einem der Ansprüche 1 bis 6, wobei die Betätigungsvorrichtung (4) einen Verriegelungsabschnitt (40) aufweist, der in eine Verriegelungsposition bewegbar und dazu ausgebildet ist, in der Verriegelungsposition zumindest den ersten Schieber (11) in der Freigabeposition und/oder den zweiten Riegel (15) in der Entriegelungsposition halten zu können.

8. Gelenk (100) nach Anspruch 7, wobei der Verriegelungsabschnitt (40) mit dem ersten Gelenkabschnitt (1), dem zweiten Gelenkabschnitt (2) und/oder dem dritten Gelenkabschnitt (3) in der Verriegelungsposition eine formschlüssige Verbindung ausbildet.

9. Gelenk (100) nach Anspruch 7 oder 8, wobei der Verriegelungsabschnitt (40) durch Verschwenken des ersten Gelenkabschnittes (1), des zweiten Gelenkabschnittes (2) und/oder des dritten Gelenkabschnittes (3) um die Schwenkachse (X) in zumindest einem vorbestimmten ersten Schwenkwinkel aus der Verriegelungsposition bewegt wird.

10. Gelenk (100) nach Anspruch 9, wobei durch Bewegung des Verriegelungsabschnitts (40) aus der Verriegelungsposition zumindest der erste Gelenkabschnitt (1) gegenüber dem zweiten Gelenkabschnitt (2) oder der zweite Gelenkabschnitt (2) gegenüber dem dritten Gelenkabschnitt (3) in diesem Schwenkwinkel oder durch Vergrösserung des Schwenkwinkels arretierbar ist.

11. Gelenk (100) nach einem der Ansprüche 1 bis 10, wobei der zumindest eine erste Riegel (15) in einer Durchgangsbohrung (7) des zweiten Gelenkabschnitts (2) gelagert ist und in der Ausgangsposition (0) der erste Schieber (11) ebenfalls in die Durchgangsbohrung (7) eingreift, und wobei der erste Schieber (11) über den ersten Riegel (15) durch die Betätigungsvorrichtung (4) in die Freigabeposition bewegbar ist.

12. Wäscheständer (200) mit einer Aufhängevorrichtung (300), zumindest zwei Standbeinen (400) und zumindest einem Gelenk (100) nach einem der Ansprüche 1 bis 11, wobei die zumindest zwei Standbeine (400) über das Gelenk (100) gegenüber der Aufhängevorrichtung (300) ausschwenkbar und arretierbar sind.

## Claims

1. A joint (100) comprising at least a first joint section (1) and a second joint section (2),
wherein the first joint section (1) and the second joint section (2) are mounted so as to be pivotable against one another about a pivot axis (X), and
wherein, in an initial position, the first joint section (1) can be locked with respect to the second joint section (2) via at least one first slider (11), and
wherein the at least one first slider (11) can be moved into a release position via an actuating device (4), so that the first joint section (1) and the second joint section (2) can be pivoted against one another about the pivot axis (X),
**characterized in that**
the first joint section (1) and the second joint section (2) form a first overlap region (21) perpendicular to the pivot axis (X), and the at least one first slider (11) is mounted in the first joint section (1) or in the second joint section (2) and is formed to engage, in the initial position in the first overlap region (21), with a first receptacle (12) formed by the respective other joint section (1, 2),
wherein the joint (100) comprises at least one third joint section (3), which can be pivoted about the pivot axis (X) with respect to the first joint section (1) and/or second joint section (2), and wherein the third joint section (3) and the second joint section (2) form a second overlap region (22) perpendicular to the pivot axis (X) on a side of the second joint section (2) facing away from the first overlap region (21), wherein at least one first latch (15) is mounted in the second joint section (2) or the third joint section (3) and is formed, in a or the initial position in the second overlap region (22), to engage with a third receptacle (16) formed by the respective other joint section (2, 3) for locking purposes and to be moved into an unlocked position by means of the actuating element (4), so that at least the second joint section (2) and the third joint section (3) can be pivoted against one another about a pivot axis.

2. The joint (100) according to claim 1, wherein the at least one first slider (11) and/or at least one second slider (13), which is mounted in the first joint section (1) or in the second joint section (2), is or are formed to engage, in at least one predetermined pivot position in the first overlap region (21), with a second receptacle (14) formed by the respective other joint section (1, 2) for locking purposes or with the first receptacle (12) for locking purposes.

3. The joint (100) according to claim 2, wherein the at least one first latch (15) and/or an at least second latch (17), which is mounted in the second joint section (2) or in the third joint section (3), is or are formed to engage, in at least one predetermined pivot position in the section overlap region (22), with a fourth receptacle (18) formed by the respective other joint section (2, 3) for locking purposes or with the third receptacle (16) for locking purposes.

4. The joint (100) according to one of claims 1 to 3, wherein the at least one first slider (11), the at least one second slider (13), the at least one first latch (15) and/or the at least one second latch (17) are pretensioned in such a way, preferably via a spring element (19), that the pretensioning force acts in the direction of the first receptacle (12) formed by the respective other joint section (1, 2, 3) for locking purposes, second receptacle (14) for locking purposes, third receptacle (16) for locking purposes and/or fourth receptacle (18) for locking purposes.

5. The joint (100) according to one of claims 1 to 4, wherein the at least one first slider (11), the at least one second slider (13), the at least one first latch (15) and/or the at least one second latch (17) can be moved in a direction opposite to the first receptacle (12) formed by the respective other joint section (1, 2, 3) for locking purposes, second receptacle (14) for locking purposes, third receptacle (16) for locking purposes and/or fourth receptacle (18) for locking purposes by means of the actuating device (4).

6. The joint (100) according to one of claims 1 to 5, wherein the first joint section (1), the second joint section (2) and/or the third joint section (3) has or have at least one guide pin (5), which extends from a side facing another joint section (1, 2, 3) in the direction of this side and is formed to be guided in at least one guide groove (6) of this other joint section (1, 2, 3).

7. The joint (100) according to one of claims 1 to 6, wherein the actuating device (4) has a locking section (40), which can be moved into a locked position and which, in the locked position, is formed to be able to hold at least the first slider (11) in the release position and/or the second latch (15) in the unlocked position.

8. The joint (100) according to claim 7, wherein, in the locked position, the locking section (40) forms a positive connection with the first joint section (1), the second joint section (2) and/or the third joint section (3).

9. The joint (100) according to claim 7 or 8, wherein the locking section (40) is moved out of the locked position by pivoting the first joint section (1), the second joint section (2) and/or the third joint section (3) about the pivot axis (X) in at least one predetermined first pivot angle.

10. The joint (100) according to claim 9, wherein at least the first joint section (1) can be locked with respect to the second joint section (2), or the second joint section (2) can be locked with respect to the third joint section (3) in this pivot angle or by increasing the pivot angle by moving the locking section (40) out of the locked position.

11. The joint (100) according to one of claims 1 to 10, wherein the at least one first latch (15) is mounted in a through bore (7) of the second joint section (2) and, in the initial position (0), the first slider (11) likewise engages with the through bore (7), and wherein the first slider (11) can be moved into the release position via the first latch (15) by means of the actuating device (4).

12. A laundry stand (200) comprising a hanging device (300), at least two legs (400) and at least one joint (100) according to one of claims 1 to 11, wherein the at least two legs (400) can be pivoted out and locked via the joint (100) with respect to the hanging device (300).

## Revendications

1. Articulation (100), pourvue d'au moins un premier segment d'articulation (1) et d'un deuxième segment d'articulation (2),
le premier segment d'articulation (1) et le deuxième segment d'articulation (2) étant logés en étant susceptibles de pivoter l'un vers l'autre autour d'un axe de pivotement (X) et
dans une position initiale, le premier segment d'articulation (1) étant susceptible d'être bloqué par l'intermédiaire d'au moins un premier coulisseau (11) par rapport au deuxième segment d'articulation (2) et
l'au moins un premier coulisseau (11) étant déplaçable par l'intermédiaire d'un dispositif d'actionnement (4) dans une position de libération, de telle sorte que le premier segment d'articulation (1) et le deuxième segment d'articulation (2) soient susceptibles de pivoter l'un vers l'autre autour de l'axe de pivotement (X),
**caractérisée en ce que**
le premier segment d'articulation (1) et le deuxième segment d'articulation (2) constituent une première zone de chevauchement (21) à la perpendiculaire de l'axe de pivotement (X) et **en ce que** l'au moins un premier coulisseau (11) est logé dans le premier segment d'articulation (1) ou dans le deuxième segment d'articulation (2) et est conçu, dans la position initiale pour s'engager dans la première zone de chevauchement (21) dans un premier logement (12) constitué par respectivement l'autre segment d'articulation (1, 2), pour le blocage,
l'articulation (100) comprenant au moins un troisième segment d'articulation (3), qui par rapport au premier segment d'articulation (1) et / ou au deuxième segment d'articulation (2) est susceptible de pivoter autour de l'axe de pivotement (X) et le troisième segment d'articulation (3) et le deuxième segment d'articulation (2) constituant une deuxième zone de chevauchement (22), à la perpendiculaire de l'axe de pivotement (X) sur un côté du deuxième segment d'articulation (2) qui est opposé à la première zone de chevauchement (21), au moins un premier verrou (15) étant logé dans le deuxième segment d'articulation (2) ou dans le troisième segment d'articulation (3) et étant conçu pour, dans une ou dans la position initiale s'engager dans la deuxième zone de chevauchement (22) dans un troisième logement (16) constitué par l'autre segment d'articulation (2, 3) respectif, pour le blocage et pour être déplacé par l'élément d'actionnement (4) dans une position de déverrouillage, de sorte qu'au moins le deuxième segment d'articulation (2) et le troisième segment d'articulation (3) soient susceptibles de pivoter l'un vers l'autre autour d'un axe de pivotement.

2. Articulation (100) selon la revendication 1, l'au moins un premier coulisseau (11) et / ou au moins un deuxième coulisseau (13), qui est logé dans le premier segment d'articulation (1) ou dans le deuxième segment d'articulation (2) étant constitué pour, au moins dans une position de pivotement prédéterminée, s'engager dans la première zone de chevauchement (21) dans un deuxième logement (14) constitué par respectivement l'autre segment d'articulation (1, 2) pour le blocage ou dans le premier logement (12) pour le blocage.

3. Articulation (100) selon la revendication 2, l'au moins un premier verrou (15) et / ou au moins un deuxième verrou (17), qui est logé dans le deuxième segment d'articulation (2) ou dans le troisième segment d'articulation (3) étant conçu ou étant conçus pour, dans au moins une position de pivotement prédéterminée dans la deuxième zone de chevauchement (22), s'engager dans un quatrième logement (18) constitué par respectivement l'autre segment d'articulation (2, 3) pour le blocage ou dans le troisième logement (16) pour le blocage.

4. Articulation (100) selon l'une quelconque des revendications 1 à 3, l'au moins un premier coulisseau (11), l'au moins un deuxième coulisseau (13), l'au moins un premier verrou (15) et / ou l'au moins un deuxième verrou (17) étant précontraints, de préférence par l'intermédiaire d'un élément à ressort (19), de telle sorte que la force de précontrainte agisse dans la direction du premier logement (12) pour le blocage, du deuxième logement (14) pour le blocage, du troisième logement (16) pour le blocage et / ou du quatrième logement (18) pour le blocage, constitué par respectivement l'autre segment d'articulation (1, 2, 3) .

5. Articulation (100) selon l'une quelconque des revendications 1 à 4, l'au moins un premier coulisseau (11), l'au moins un deuxième coulisseau (13), l'au moins un premier verrou (15) et / ou l'au moins un deuxième verrou (17) étant déplaçable par le dispositif d'actionnement (4) dans une direction opposée à un premier logement (12) pour le blocage, à un deuxième logement (14) pour le blocage, à un troisième logement (16) pour le blocage et / ou à un quatrième logement (18) pour le blocage, constitué par l'autre segment d'articulation (1, 2, 3) respectif.

6. Articulation (100) selon l'une quelconque des revendications 1 à 5, le premier segment d'articulation (1), le deuxième segment d'articulation (2) et / ou le troisième segment d'articulation (3) comportant au moins une tige de guidage (5) qui à partir d'un côté qui fait face à un autre segment d'articulation (1, 2, 3) s'étend dans la direction dudit côté et est conçu pour être guidé dans au moins une rainure de guidage (6) dudit autre segment d'articulation (1, 2, 3).

7. Articulation (100) selon l'une quelconque des revendications 1 à 6, le dispositif d'actionnement (4) comportant un segment de verrouillage (40), qui est déplaçable dans une position de verrouillage et qui est conçu pour, dans la position de verrouillage pouvoir maintenir au moins le premier coulisseau (11) dans la position de libération et / ou le deuxième verrou (15) dans la position de déverrouillage

8. Articulation (100) selon la revendication 7, le segment de verrouillage (40) constituant une liaison par complémentarité de forme avec le premier segment d'articulation (1), le deuxième segment d'articulation (2) et / ou le troisième segment d'articulation (3) dans la position de verrouillage.

9. Articulation (100) selon la revendication 7 ou 8, par pivotement du premier segment d'articulation (1), du deuxième segment d'articulation (2) et / ou du troisième segment d'articulation (3) le segment de verrouillage (40) étant déplacé autour de l'axe de pivotement (X) dans au moins un premier angle de pivotement hors de la position de verrouillage.

10. Articulation (100) selon la revendication 9, par déplacement du segment de verrouillage (40) hors de la position de verrouillage, au moins le premier segment d'articulation (1) étant susceptible d'être bloqué par rapport au deuxième segment d'articulation (2) ou le deuxième segment d'articulation (2) étant susceptible d'être bloqué par rapport au troisième segment d'articulation (3) dans ledit angle de pivotement ou par augmentation de l'angle de pivotement.

11. Articulation (100) selon l'une quelconque des revendications 1 à 10, l'au moins un premier verrou (15) étant logé dans un perçage traversant (7) du deuxième segment d'articulation (2) et dans la position initiale (0), le premier coulisseau (11) s'engageant également dans le perçage traversant (7) et le premier coulisseau (11) étant déplaçable par l'intermédiaire du premier verrou (15) par le dispositif d'actionnement (4) dans la position de libération.

12. Étendoir à linge (200) pourvu d'un dispositif d'étendage (300), d'au moins deux pieds de support (400) et d'au moins une articulation (100) selon l'une quelconque des revendications 1 à 11, les au moins deux pieds de support (400) étant susceptibles de pivoter et d'être bloqués par l'intermédiaire de l'articulation (100) par rapport au dispositif d'étendage (300).
